# EUROPEAN PATENT SPECIFICATION

(11) **EP 4 042 603 B1**
(45) Date of publication and mention of the grant of the patent: **10.09.2025**
(21) Application number: 20863371.9
(22) Date of filing: 25.09.2020
(51) Int. Cl.: H04B 17/00, B65G 15/28, B65C 9/26, H04M 1/04, H04M 1/24

(54) **SYSTEMS AND METHODS FOR PROCESSING DEVICES**
SYSTEME UND VERFAHREN ZUM VERARBEITEN VON VORRICHTUNGEN
SYSTÈMES ET PROCÉDÉS DE TRAITEMENT DE DISPOSITIFS

(30) Priority: 25.09.2019 US 201962905924 P; 08.04.2020 US 202063006991 P
(43) Date of publication of application: 17.08.2022
(73) Proprietor: Brightpoint North America L.P., Plainfield IN 46168 (US)
(72) Inventor: MCGRATH, Timothy, Ft. Worth, TX 76155 (US)
(74) Representative: GPI Brevets
(86) International application number: PCT/US2020/052906
(87) International publication number: WO 2021/051116

(56) References cited:
- WO-A1-2018/187665
- US-A1- 2013 200 912
- US-A1- 2016 187 877
- US-A1- 2016 224 023
- US-A1- 2017 318 140
- US-B2- 7 388 977

## Description

### TECHNICAL FIELD

The present disclosure relates to methods for processing devices, the methods comprising wiping data from a device, performing at least one diagnostic test on a device, recording an outcome of the at least one diagnostic test, sorting the devices depending upon the outcome of the at least one diagnostic test, and refurbishing those devices that have passed the at least one diagnostic test to a standard operational state. The present disclosure further relates to automated systems or apparatuses for processing a multitude of mobile telecommunication devices with different operating systems, by which the devices are functionally tested according to diagnostic tests, visually graded, all digital media stored on the devices is removed, and the devices are refurbished to standard operational states.

### BACKGROUND

In modern mobile telecommunication device refurbishment, performing diagnostic tests on devices even by single-device robotic stations are no longer efficient technology solutions, due, for example, to slow testing speeds, long processing times, and/or cost-ineffective automation.

Further, a number of technology limitations prolong current device processing times. Current device refurbishment technology solutions require that the devices be pre-charged. Failing batteries are not immediately detected and removed. Pre-sorting by customer, model number, or device operating system is required prior to processing to ensure proper connection with processing equipment. Manual determination of the feature set of a model of a device and/or any cosmetic damage on the device, and the concomitant requisite one or more diagnostic tests required, is inefficient, laborious, and subjective. Different devices require a different set of one or more diagnostic tests, each diagnostic test of which may be dependent upon the customer needs, model number, device operating system, or outcome of a previous diagnostic test, ultimately requiring the transfer of devices to different pieces of equipment. Human detection of counterfeit device parts or displays is also inefficient. Devices may remain idle while diagnostic tests are performed on other devices. Each of these limitations make the current rates of device processing cost-ineffective.

Existing technology requires continual movement and replacement of devices along a conveyor system that is complex, costly, and requires constant recalibration of multi-axis robotic movement apparatuses. In addition, the movement of multiple devices is time-consuming, resulting in lost time, as one mobile telecommunication device at a time must be moved to a new station, causing considerable dwell time in which each mobile telecommunication device is idle for periods of time while each mobile telecommunication device is moved.

As disclosed in the document WO 2018187665A1, existing technology requires all phones to be placed on separate charging racks for several hours prior to operation, which consumes many hours of preprocessing time and the required movement of hundreds of phones.

Another drawback of existing technology is that it takes hours, sometimes days, to switch over jigs and software control for various phone models.

In view of the above, there is a need for methods for processing mobile telecommunication devices that are faster, more cost-effective, more automated, and/or more versatile.

Further, there is a need for systems or apparatuses capable of smarter mobile telecommunication device processing lines, utilizing rapid and cost-effective automation, with flexible software and mechanical capabilities that can integrate, automate, and manage various line-optimized diagnostics automation hardware components.

If methods for processing devices could be found that were faster, more cost-effective, more automated, and/or more versatile, this would represent a useful contribution to the art.

Additionally, systems or apparatuses capable of smarter mobile telecommunication device processing lines, utilizing rapid and cost-effective automation, with flexible software and mechanical capabilities that can integrate, automate, and manage various line-optimized diagnostics automation hardware components, this would also represent a useful contribution to the art.

### SUMMARY OF THE INVENTION

The invention is directed to the subject-matter of the independent claims. Advantageous embodiments are set out in the dependent claims.

In an embodiment, the present disclosure relates to a conveyorized system for processing a plurality of mobile telecommunication devices.

In another embodiment, the present disclosure relates to a method of processing a plurality of mobile telecommunication devices.

In yet another embodiment, a method of processing a plurality of mobile telecommunication devices can include the steps of: (a) loading the plurality of mobile telecommunication devices into a pallet; (b) testing individually each mobile telecommunication device of the plurality of mobile telecommunication devices according to at least one diagnostic test; (c) grading individually each mobile telecommunication device of the plurality of mobile telecommunication devices visually according to a visual grading criterion; and (d)removing the plurality of mobile telecommunication devices from the pallet; wherein the plurality of mobile telecommunication devices is processed in about 4 minutes.

### BRIEF DESCRIPTION OF THE DRAWINGS

**FIG. 1** depicts an exemplary embodiment of a solenoid-controlled pedestal for an individual mobile telecommunication device under test.
**FIG. 2** depicts a top view of an exemplary embodiment of a conveyorized system for processing a plurality of mobile telecommunication devices simultaneously.
**FIG. 3** depicts a perspective view of a plurality of actuators within an individual computerized pallet and within an individual testing station that apply motion to each individual mobile telecommunication device in the individual computerized pallet.

### DETAILED DESCRIPTION

In an embodiment, the present disclosure provides a novel system for processing a plurality of mobile telecommunication devices ("MTDs"), wherein integrated pallets are fixed to a conveyance belt, whereby a plurality of MTDs, each of which operates a mobile operating system, are placed into a pallet by an operator, whereby each of the plurality of MTDs is functionally tested according to at least one diagnostic test, visually graded, and sorted for disposition, and whereby the MTDs of the plurality of MTDs that pass the at least one diagnostic test may be erased of all stored digital media and refurbished to a standard operational state. In certain illustrative embodiments, the systems for processing the plurality of MTDs provided herein contemplate a variety of built-in and selectable functions.

In another embodiment, the present disclosure provides a novel system for processing a plurality of MTDs, wherein the plurality of MTDs is batch-processed. In certain embodiments, each mobile telecommunication device under test ("DUT") is connected to an individual DUT controller. In such an embodiment, a plurality of the DUTs, connected to the individual DUT controller, is loaded into a pallet. The plurality of DUTs, connected to the individual DUT controller, may be loaded into the pallet manually or by robotic arm. The pallet is loaded onto a conveyor belt including at least one testing lane. In certain embodiments, the conveyor belt may include a plurality of testing lanes. Each testing lane includes at least one individual testing station. In certain embodiments, each testing lane may include a plurality of individual testing stations. Each individual testing station executes at least one diagnostic test on the plurality of DUTs, connected to the individual DUT controller, in the pallet. After a pallet passes the final individual testing station of the at least one individual testing station, the pallet of the plurality of DUTs is removed from the conveyor belt, and the plurality of DUTs is removed from the pallet. The DUTs from the plurality of DUTs are then individually sorted for disposition.

In certain embodiments, a plurality of DUTs may consist of 2 or more individual DUTs. In other embodiments, a plurality of DUTs may consist of 4 or more individual DUTs. In further embodiments, a plurality of DUTs may consist of 6 or more individual DUTs. In further embodiments, a plurality of DUTs may consist of 8 or more individual DUTs. In further embodiments, a plurality of DUTs may consist of 10 or more individual DUTs. In further embodiments, a plurality of DUTs may consist of 12 or more individual DUTs. In further embodiments, a plurality of DUTs may consist of 14 or more individual DUTs. In further embodiments, a plurality of DUTs may consist of 16 or more individual DUTs. In further embodiments, a plurality of DUTs may consist of 20 or more individual DUTs. In further embodiments, a plurality of DUTs may consist of 24 or more individual DUTs. In further embodiments, a plurality of DUTs may consist of 30 or more individual DUTs. Notwithstanding the above non-limiting examples of the quantity of individual DUTs contemplated by the term "a plurality of DUTs," it will be apparent to those skilled in the art that the term "a plurality of DUTs" is susceptible to additional integer quantities of individual DUTs above one (1).

In certain embodiments, a plurality of testing lanes may consist of 2 or more individual testing lanes. In other embodiments, a plurality of testing lanes may consist of 4 or more individual testing lanes. Notwithstanding the above non-limiting examples of the quantity of individual testing lanes contemplated by the term "a plurality of testing lanes," it will be apparent to those skilled in the art that the term "a plurality of testing lanes" is susceptible to additional integer quantities of individual testing lanes above one (1).

In certain embodiments, a plurality of testing stations may consist of 2 or more individual testing stations. In other embodiments, a plurality of testing stations may consist of 4 or more individual testing stations. In further embodiments, a plurality of testing stations may consist of 6 or more individual testing stations. In further embodiments, a plurality of testing stations may consist of 8 or more individual testing stations. In further embodiments, a plurality of testing stations may consist of 10 or more individual testing stations. In further embodiments, a plurality of testing stations may consist of 12 or more individual testing stations. In further embodiments, a plurality of testing stations may consist of 14 or more individual testing stations. In further embodiments, a plurality of testing stations may consist of 16 or more individual testing stations. Notwithstanding the above non-limiting examples of the quantity of individual testing stations contemplated by the term "a plurality of testing stations," it will be apparent to those skilled in the art that the term "a plurality of testing stations" is susceptible to additional integer quantities of individual testing stations above one (1).

In certain embodiments, a plurality of testing stations may include at least one individual testing station capable of X-Y touch point control of each individual DUT of a plurality of DUTs. In certain embodiments, a plurality of testing stations may include more than one individual testing station capable of X-Y touch point control of each individual DUT of a plurality of DUTs.

In certain embodiments, a plurality of testing stations may include at least one individual testing station including sound and ambient light isolation boxes. The sound and ambient light isolation boxes may be automatically placed over a pair of individual DUTs simultaneously.

In certain embodiments, a pallet may remain at an individual testing station for less than about 10 minutes. In other embodiments, a pallet may remain at an individual testing station for less than about 9 minutes. In further embodiments, a pallet may remain at an individual testing station for less than about 8 minutes. In further embodiments, a pallet may remain at an individual testing station for less than about 7 minutes. In further embodiments, a pallet may remain at an individual testing station for less than about 6 minutes. In further embodiments, a pallet may remain at an individual testing station for less than about 5 minutes. In further embodiments, a pallet may remain at an individual testing station for less than about 4 minutes. In further embodiments, a pallet may remain at an individual testing station for less than about 3 minutes. In further embodiments, a pallet may remain at an individual testing station for less than about 2 minutes. In further embodiments, a pallet may remain at an individual testing station for less than about 1 minute.

In certain embodiments, a system may be capable of processing up to about 480 mobile telecommunication devices in an hour. In other embodiments, a system may be capable of processing up to about 640 mobile telecommunication devices in an hour. In further embodiments, a system may be capable of processing up to about 960 mobile telecommunication devices in an hour.

In certain embodiments, the mobile operating system of a MTD may be selected from the group consisting of Apple iOS^{™} and Android^{™}. In other embodiments, the mobile operating system of a MTD may be any mobile operating system capable of being installed on a MTD sold commercially.

In an embodiment, the present disclosure provides a novel method for processing a plurality of mobile telecommunication devices, the method including the steps of: (a) loading the plurality of mobile telecommunication devices into a pallet; (b) testing individually each mobile telecommunication device of the plurality of mobile telecommunication devices according to at least one diagnostic test; (c) grading individually each mobile telecommunication device of the plurality of mobile telecommunication devices visually according to a visual grading criterion; and (d) removing the plurality of mobile telecommunication devices from the pallet.

In another embodiment, the present disclosure provides a method for processing a plurality of mobile telecommunication devices, the method including the steps of: (a) loading the plurality of mobile telecommunication devices into a pallet; (b) erasing all stored digital media from each mobile telecommunication device of the plurality of mobile telecommunication devices; (c) testing individually each mobile telecommunication device of the plurality of mobile telecommunication devices according to at least one diagnostic test; (d) grading individually each mobile telecommunication device of the plurality of mobile telecommunication devices visually according to a visual grading criterion; and (e) removing the plurality of mobile telecommunication devices from the pallet.

In yet another embodiment, the present disclosure provides a method for processing a plurality of mobile telecommunication devices, the method including the steps of: (a) loading the plurality of mobile telecommunication devices into a pallet; (b) erasing all stored digital media from each mobile telecommunication device of the plurality of mobile telecommunication devices; (c) installing a testing application on each mobile telecommunication device of the plurality of mobile telecommunication devices; (d) testing individually each mobile telecommunication device of the plurality of mobile telecommunication devices according to at least one diagnostic test; (e) grading individually each mobile telecommunication device of the plurality of mobile telecommunication devices visually according to a visual grading criterion; (f) erasing the testing application from the plurality of mobile telecommunication devices so as to provide erased mobile telecommunication devices in a standard operational state; and (g) removing the plurality of mobile telecommunication devices from the pallet.

In yet another embodiment, the present disclosure provides a method for processing a plurality of mobile telecommunication devices, the method including the steps of: (a) loading the plurality of mobile telecommunication devices into a pallet; (b) erasing all stored digital media from each mobile telecommunication device of the plurality of mobile telecommunication devices; (c) installing a testing application on each mobile telecommunication device of the plurality of mobile telecommunication devices; (d) testing individually each mobile telecommunication device of the plurality of mobile telecommunication devices according to at least one diagnostic test such that a mobile telecommunication device failing any at least one diagnostic test more than once is a failing mobile telecommunication device; (e) grading individually each mobile telecommunication device of the plurality of mobile telecommunication devices visually according to a visual grading criterion such that a mobile telecommunication device failing the visual grading criterion is a visually failing mobile telecommunication device; (f) erasing the testing application from the plurality of mobile telecommunication devices so as to provide erased mobile telecommunication devices in a standard operational state; (g) removing the plurality of mobile telecommunication devices form the pallet; and (h) sorting failing mobile telecommunication devices and visually failing mobile telecommunication devices from erased mobile telecommunication devices in a standard operational state.

In certain embodiments, methods for processing a plurality of mobile telecommunication devices may further include one or more individual testing steps by which each mobile telecommunication device is tested by performing at least one diagnostic test on each mobile telecommunication device. In various embodiments, these one or more individual testing steps can be carried out independently of one another and can be carried out in any sequence, without limitation.

In various embodiments, the one or more individual testing steps include, but are not limited to: (i) performing a Device Touch Screen diagnostic test; (ii) performing a WiFi diagnostic test; (iii) performing a Bluetooth diagnostic test; (iv) performing a Magnetometer sensor diagnostic test; (v) performing a GPS diagnostic test; (vi) performing a NFC diagnostic test; (vii) performing a Wireless Charging diagnostic test; (viii) performing one or more Camera diagnostic test(s); (ix) performing a Button Keys Sub Keys diagnostic test; (x) performing a Sensor Accelerometer Sensor diagnostic test; (xi) performing a Sensor Gyro Sensor diagnostic test; (xii) performing a Sensor Light Sensor diagnostic test; (xiii) performing one or more Audio Test Station diagnostic test(s); (xiv) performing an Earpiece diagnostic test; (xv) performing a Loudspeaker diagnostic test; (xvi) performing a Microphone diagnostic test; (xvii) performing a Vibration diagnostic test; (xviii) performing a LCD color diagnostic test; (xix) performing a LCD dimming diagnostic test; (xx) performing a LCD ghosting diagnostic test; (xxi) performing a LCD dead pixel diagnostic test. The one or more individual testing steps, including, but not limited to, individual testing steps (i) - (xxi), may be performed individually, in any subset, and in any sequence.

In certain embodiments, a method may be capable of processing up to about 480 mobile telecommunication devices per hour. In other embodiments, a method may be capable of processing up to about 640 mobile telecommunication devices per hour. In further embodiments, a method may be capable of processing up to about 960 mobile telecommunication devices per hour.

The various embodiments of systems and methods described above may be further understood in connection with the following Examples. In addition, the following non-limiting examples are provided to illustrate the invention. The processes and systems describe what is believed will be typically effective to perform the processes indicated. However, the person skilled in the art will appreciate that it may be necessary to vary the procedures for any given embodiment of the invention, e.g., vary the steps and/or the order of steps used.

### EXAMPLE 1

A system for processing mobile telecommunication devices includes a conveyance system with integrated pallets fixed to its belt that allow a plurality of MTDs, such as a variety of iPhone- and Android-specific mobile devices, to be placed on its pallets by an operator to be functionally tested, visually graded, and all media removed, and refurbished to a current standard operational state through a variety of built-in and selectable functions. The system provides a flexible software and mechanical solution that will drive, integrate, automate, and manage various line-optimized diagnostics automation hardware components. Devices are processed in batches (pallets), where each pallet includes 16 devices of mixed types, both Apple iOS^{™} and Android^{™}. Each DUT is connected to a DUT controller. Each pallet is loaded manually or by robotic arm, which is permanently fixed to a conveyor belt with eight individual testing stations per individual testing line (i.e., side). The first six individual testing stations have common functionality with X-Y touch point control of the DUT. Each of the first six individual testing stations executes one or more of the exact same at least one diagnostic test, and after two unsuccessful attempts of any of the least one diagnostic test, a failure is logged in the Business Processing Management ("BPM") system. The remaining two individual testing stations have sound and ambient light isolation boxes that are automatically placed over each two individual DUTs at a time. The pallets spend about four minutes at each individual testing station. After the final station, the MTDs are manually removed and placed on a conveyance system to be sorted for disposition.

The system has several non-limiting features. No pre-charging of devices is required. Battery health is automatically determined for immediate removal of bad batteries to eliminate wasted processing time. Devices are independently tested and cosmetically graded based on customer requirements and model features. Devices can be loaded and the machine automatically adjusts to the form factor and determines the proper connector and port locations for automated insertion. The system is capable of concurrently processing up to 480 MTDs per hour, up to one individual MTD every 7.5 seconds, or up to 1.9 million MTDs per year. The at least one diagnostic test can be selected from a suite of one hundred different diagnostic tests for individual processing of each individual DUT. Smart testing automatically determines the feature set of the model of MTD for each individual DUT, and then performs only those diagnostic tests that have features aligning with the model of MTD. An advanced photometric vision system can automatically and rapidly determine cosmetic damage, surface defects, and pixel level display defects, while differentiating fingerprints and dust particles from defects. Counterfeit parts can be detected on displays of DUTs based on geometry and color tone of pixels, and on cover logos.

The pallets are mechanically fixed at a center point onto the conveyor line with power, data, and audio connectors automatically plugged into the proper interfaces on each individual MTD after the device type is determined using Bluetooth wireless communication with each MTD after the MTD is placed on the pallet. The data, power, and audio connectors are fixed to a solenoid for insertion into the MTD and connected to a small, embedded controller (i.e., headless "brick" PC), mounted beneath the MTDs on the pallet. Each pallet holds 16 MTDs, or devices under test (DUTs). The conveyance system then has a multitude of pallets that travel in clockwise sequence through the conveyance system to be functionally and cosmetically processed through a variety of functions. At each individual testing station, the pallets remain still for a short period of time (i.e., approximately four (4) minutes each), before moving along to the next individual testing station.

At each of the first six individual testing stations, an X-Y arm is fixed in place and operates pneumatic plungers on mobile device touch points to facilitate the functions being operated on for each of the individual DUTs. With the assistance of the dedicated embedded computing controllers beneath each pallet, the DUT touch points are activated via an X-Y automated plunger while the embedded controller is connected to the data port and audio port of each individual DUT. At the last two individual testing stations, the pallet rests at each individual testing station for an interval of time, and a small enclosure is automatically deployed over the DUTs to allow audio and ambient light isolation for testing and machine vision photometric grading of each individual DUT. Once the audio and video processing are completed, the enclosure is automatically lifted from the DUTs before the pallet is automatically moved to the next station for further processing of the DUTs.

Management data connectivity to the conveyance system is done with a high-speed wireless local-area network ("LAN") device built into the embedded controller located beneath each pallet. The IEEE 802.11x wireless networking connection ("WiFi") is logically connected to the Motion Control System ("MCS") WiFi Access Point in proximity to the conveyance system. The data connectivity allows all embedded controllers to individually communicate to an external MCS and a business Processing Management ("BPM") System that control the state and supervisory control of the conveyance system. The BPM system also maintains a running log of the status and/or state of each individual DUT as it moves through the conveyance system. The low voltage (9/24 Volt DC) electrical power and ground connections to be used by the conveyor belt electronics that are fixed to the bottom of the pallets are implemented by lithium ion batteries on each pallet along with charging stations that are fixed near the edge of the conveyor belt and each pallet has a contactor that will transfer the electrical power to recharge the lithium ion batteries on each pallet.

The X-Y arms that are located at each station location and the sound and light enclosures at some stations are controlled by the DUT embedded controller that receives command messages from the MCS. The MCS delivers status and receives supervisory control from the BPM System.

The automatic conveyance system allows the concurrent functional processing of multiple DUTs with multiple diagnostic tests and cosmetic inspection functions at each individual testing station that the pallet moves to in sequence. The DUTs are fixed in place on the pallets and not moved by complex, expensive robotic arms or manual removal and replacement by manual operators.

The conveyance system executes concurrent parallel processing, which greatly increases production capacity while simplifying the mechanical requirements of the system. The low cost of embedded controllers allows dozens of computing engines to concurrently operate independently on each individual DUT, which significantly increases production throughput of the system. The system overcomes the limitations of existing technology by having all DUTs placed on the pallets and constantly under power and charging through the entire process. This allows phones that are on pallets awaiting the first individual testing station to be charged, and includes a check for battery health and status with a "green-light"/"red-light" indicator of charge level using smart battery charger functionality. The operator can quickly remove any bad batteries prior to entry into the first individual testing station for processing.

The conveyance system allows any form factor and any mobile operating system to be operated on as the mechanics adjust to the mobile telecommunication device form factor automatically after reading the mobile telecommunication device identification from the DUT and using a look-up table of mobile telecommunication device form factor and port location. The form factor and mobile operating software automatically adjust to the mobile telecommunication device model based on a pre-configured library of phone mechanical and logical data attributed to the mobile telecommunication device identification.

The automated conveyance system transfers data and electrical connectivity to the conveyance system through wireless data and a lithium ion battery, thus providing data and electrical connections to allow a multitude of DUTs to be continuously operated upon with simple X-Y arms fixed at each of the first six individual testing station locations to operate touch points on each individual simultaneously. The audio and ambient light enclosures on the final two individual testing stations have a camera system that moves in one axis only (i.e., y-axis) and isolates the individual DUT for necessary audio and visual inspection. This greatly simplifies audio and visual inspection, which otherwise would require robotic or manual removal and placement of each device individually in a separate sound and light chamber for processing before being placed back onto the conveyance system one at a time.

The automated conveyance system has an end-to-end throughput of at least 480 mobile telecommunication devices per hour.

The conveyance system according to an embodiment described in this Example performs at least one of the diagnostic tests listed in Table 1 below at each of the first six individual testing stations.

**TABLE 1**

| Diagnostic Tests Capable of Being Performed at Each of First Six Individual Testing Stations | |
|---|---|
| 1. Skip activation screen and launch Test App | 51. RF Receiver Test |
| 2. Audio Back Microphone Total Harmonic Distortion ("THD") 0.XXX% | 52. RF RX BER 0% |
| 3. Audio Bottom Microphone THD 0.XXX% | 53. RF RX quality PASS/FAIL |
| 4. Audio Earpiece Test (Up, Down, Record) | 54. RF test LTE PASS/FAIL |
| 5. Audio Frequency error -X.X% | 55. RF test WCDMA PASS/FAIL |
| 6. Audio Front MIC Test | 56. RF TX EVM RMS X.X% |
| 7. Audio Front Speaker THD 0.XXX% | 57. RF TX frequency error XX.X Hz |
| 8. Inspect the headphone port for damage or corroded contacts | 58. RF TX phase error RMS 0.X deg |
| 9. Audio Headphone Microphone THD 0.XXX% | 59. Rooting KNOX |
| 10. Audio Headphone Speaker Left THD 0.XXX% | 60. Video Camera Zoom In and Out |
| 11. Audio Headphone Speaker Right THD 0.XXX% | 61. Battery Fast/Rapid Charge Function |
| 12. Audio Rear Speaker THD X.XXX% | 62. Blacklist/Financial Lock Status |
| 13. Audio Top Microphone THD X.XXX% | 63. Sensor Iris Test Function |
| 14. Auto Trust | 64. Rooting/Jailbreak Check for Apple iOS^{™} |
| 15. Battery Capacity XXX.X% | 65. Grip Sensor Function |
| 16. Battery Charged Battery Level XX% | 66. Charge in a Powered Off State and Powered On State |
| 17. Battery Charging Current Min/Max X.XX A / X.XX A | 67. S Pen |
| 18. Battery Lifetime Battery Cycles XXX | 68. SD |
| 19. Battery Status Green = PASS / Red = FAIL | 69. Sensor Accelerometer Sensor PASS/FAIL |
| 20. Inspect the charge port for any signs of physical or liquid damage | 70. Sensor Ambient Light Sensor PASS/FAIL |
| 21. Bluetooth PASS/FAIL | 71. Sensor Barometer Sensor PASS/FAIL |
| 22. Button Keys Sub Keys Test (Volume Keys, Home Key, Power Key, Silent Key, Bixby, Mute) | 72. Sensor Gyro Sensor PASS/FAIL |
| 23. Color of unit: #XXXXXX | 73. Sensor Hall Effect Sensor |
| 24. Data Wipe (Quick Wipe Only) | 74. Sensor HRM Sensor |
| 25. Data Wipe Reset Factor Reset/Settings Restore PASS/FAIL | 75. Sensor Light Sensor Test |
| 26. Data Wipe or Flash > Auto Trust > Install Wi-Fi Profile and App | 76. Sensor Magnetic Sensor PASS/FAIL |
| 27. DUT result: PASS | 77. Sensor Proximity Sensor PASS/FAIL |
| 28. Flashlight PASS/FAIL | 78. Sensor Facial Recognition |
| 29. GPS | 79. Sensor Iris |
| 30. IMEI Code: XXXXXXXXXXXXXXX | 80. SIM Test PASS/FAIL |
| 31. IRAT Handover PASS/FAIL | 81. Test Duration: X:XX |
| 32. LDI Test. Verify that the placement of the LDI is correct and that it is not red or discolored. | 82. Test Verification Certificate |
| 33. LED Test | 83. Tester ID: XXX-XXX |
| 34. Lock FRP / FMIP | 84. Touch Fingerprint |
| 35. Make: Apple/Android | 85. Touch Force (3D) Touch PASS/FAIL |
| 36. Memory: Size of Memory: XXX GB | 86. Touch ID PASS/FAIL |
| 37. Model No.: XXXXX | 87. Touch Taptic Engine PASS/FAIL |
| 38. Nest Operator ID: XXXXXX | 88. Touch Touchscreen PASS/FAIL |
| 39. Nest Slot ID XXX Initial Battery Level XX% | 89. Enable Verizon Hidden Menu Mode |
| 40. Nest Station Serial Number: XXXXXXXXXXX | 90. Vibrator Test |
| 41. NFC Test PASS/FAIL | 91. Video Dimming |
| 42. OS Final OS Version XX | 92. Video Front Camera / Picture Test |
| 43. OS Flash Test | 93. Video Front Camera / Video Test |
| 44. OS Upgrade Status ENABLED | 94. Video Grading A, B+, B, C, E |
| 45. OS: iOS^{™} 10 | 95. Video Rear Camera / Video Test |
| 46. Part No.: XXXXX LL/A | 96. Video Rear Camera / Picture Test |
| 47. Phone Activation PASS/FAIL | 97. Video Screen Brightness Adj. PASS/FAIL |
| 48. QR Code Reporting | 98. Video Screen Quality (RGB, damage) PASS/FAIL |
| 49. RF Call Test PASS/FAIL | 99. WIFI (2.4 GHz and 5 GHz) PASS/FAIL |
| 50. RF GSM/CDMA: GSM+CDMA | 100. Wireless Charge |

Each individual DUT controller is a small board computing unit designed to control eight (8) individual DUTs placed in a designated pallet. An individual DUT controller works simultaneously with other individual DUT controllers on the same pallet, and other individual DUT controls on other pallets with similar DUT controllers. Each individual DUT controller has multiple capabilities, including, but not limited to: (a) USB-host, to control USB-connectable devices, such as DUTs, Pallet, and MCS Servo Controller; (b) Ethernet, for LAN connectivity; (c) General Purpose Input/Output ("GPIO"), with LED indicators and physical buttons; (d) Audio, for output stereo (Right ("R")/Left ("L")) Stream; (e) Control of X-Y arm, for up to at least sixteen (16) devices under control of an individual DUT controller; (f) WLAN, WiFi Direct Network for direct communication between individual testing stations peer-to-peer.

The software stack for an individual DUT controller includes, but is not limited to, five (5) layers: (a) Hardware Abstraction Layer ("HAL"), for the multiple capabilities (a) - (f) listed above in paragraph [0047], and allowing easy migration to other individual DUT controller hardware; (b) Application Layer, to provide individual DUT controller autonomous capabilities, including, but not limited to (i) ADR/MMR, device recognition of characteristics extractions of make, model, Serial Number ("SN"), International Mobile Equipment Identity ("IMEI"), and the like, (ii) Diagnostics, including running and collecting results of individual DUT diagnostic tests, (iii) Wipe, or content clearing of individual DUTs, (iv) Flash, or individual DUT SW (ROM) loading over USB, (v) Activation, or individual DUT activation process; (c) API Layer, for integration with the central BPM; (d) Automation Control of X-Y automation for touch point control; (e) DUT controller bootstrapping and update processes.

The Centralized BPM Engine is the software layer that drives the individual DUTs according to third-party, real-time configuration control. For example, the BPM Engine controls the process flows via software hooks to API. The Centralized BPM Engine includes layers, including, but not limited to: (a) the Process Flow Engine Layer, which hosts and runs process flows pre-configured with default parameters and path, and utilizes the DUT controller API to automate activities on a plurality of DUTs; (b) the Flow Hooks API Layer, which consults third party in real-time for overriding default parameters and path of a flow, provides result of a flow instance, and provides centralized real-time monitoring capabilities to assist with process control of the automated line.

An exemplary list of mobile telecommunication devices that can be processed according to an embodiment described in this Example is provided in Table 2. It is expected that the embodiment described in this Example can be implemented to process other mobile telecommunication devices yet to be released that are capable of operating Apple iOS^{™}, Android^{™}, or another mobile operating system capable of being installed on a mobile telecommunication device. Further, the term "mobile telecommunication device" is not to be understood to be limited to, or specifically characterized by, the list provided in Table 2.

**TABLE 2**

| Apple | |
|---|---|
| iPhone 6 | iPhone 5S GSM |
| iPhone 6S | iPhone 6 Plus |
| iPhone 7 | iPhone 6S Plus |
| iPhone 8 | iPhone 7 Plus |
| iPhone SE | iPhone 8 Plus |
| iPhone XS | iPhone X |
| Samsung | |
| Galaxy A6 | Galaxy S10 Plus |
| Galaxy A8 | Galaxy A7 (2018) |
| Galaxy J3 | Galaxy Grand Prime |
| Galaxy Note 8 | Galaxy Note 5 |
| Galaxy S10 | Galaxy Note 9 |
| Galaxy S5 | Galaxy S4 |
| Galaxy S6 | Galaxy S5 Active |
| Galaxy S7 Active | Galaxy S7 |
| Galaxy S8 | Galaxy S7 Edge |
| Galaxy S9 | Galaxy S8 Plus |
| Galaxy Tab E | Galaxy S9 Plus |
| LGE | |
| V35 ThinQ | V40 ThinQ |
| G7 fit | G7 ThinQ |
| Stylo 4+ | Tribute |
| Rebel 4 LTE | Stylo 4 |
| Motorola | |
| Moto G6 | Moto G7 |
| Moto G7 Plus | Moto G7 Power |
| Moto Z2 Play | Moto G7 Play |
| Moto G6 Plus | Moto E5 |
| Moto E5 Plus | Moto Z3 Play |
| Moto Z2 Force | |
| Google | |
| Pixel 3 | Pixel 3 XL |
| Pixel 2 | Pixel 2 XL |

### EXAMPLE 2

A conveyorized system for processing mobile telecommunication devices carries multiple mobile telecommunication devices, or MTDs, operating mobile operating systems including, but not limited to, Apple iOS^{™} or Android^{™}, in a computerized pallet. The MTDs in the pallet are subject to at least the following processes: (1) wiped so that there is no residual data; (2) functionally tested with at least 100 different diagnostic tests; (3) logged, along with diagnostic test results, automatically at multiple individual testing stations into Enterprise Resource Planning ("ERP") system; (4) graded both functionally and cosmetically.

These processes are achieved by having a computerized pallet first loaded with devices by an operator. The computerized pallets on the conveyor belt travel to various individual testing stations in sequence. Each individual testing station is capable of the complete suite of diagnostic tests, so as to continue diagnostic tests not completed at previous individual testing station positions. The conveyorized system is configured in "stadium" (i.e., discorectangle, or obround) geometry, with 16 total positions, such that computerized pallets move in two lanes of 8 positions each, which move on a conveyor in continuous stadium formation, in a clockwise rotation. Each lane corresponds to half of the length of the conveyor. Each computerized pallet is loaded with unprocessed mobile telecommunication devices at the beginning of the first lane ("lane A") and the processed mobile telecommunication devices are unloaded at the end of said lane A. While the computerized pallet remains in position at the end of said lane A subsequent to unloading of the processed lane A mobile telecommunication devices, more unprocessed mobile telecommunication devices are loaded into the computerized pallet, commencing the second lane ("lane B"). At the end of said lane B, the processed lane B mobile telecommunication devices are unloaded, and subsequently more unprocessed lane A mobile telecommunication devices are loaded into the computerized pallet, commencing lane A again. Lane A and Lane B both proceed simultaneously.

The conveyorized system for processing mobile telecommunication devices according to an embodiment described this Example performs at least one of the diagnostic tests listed in Table 3 below at each of the individual testing stations.

**TABLE 3**

| Diagnostic Tests Capable of Being Performed at Individual Testing Stations | |
|---|---|
| 1. Skip activation screen and launch Test App | 51. Phone activation PASS/FAIL |
| 2. Audio Back microphone THD 0.XXX% | 52. QR code reporting |
| 3. Audio Bottom microphone THD 0.XXX% | 53. RF Call Test PASS/FAIL |
| 4. Audio Earpiece Test (Up, Down, Record) | 54. RF GSM/CDMA: GSM+CDMA |
| 5. Audio Frequency Error -X.X% | 55. RF Receiver Test |
| 6. Audio Front MIC Test | 56. RF RX BER 0% |
| 7. Audio Front Speaker THD 0.XXX% | 57. RF RX Quality PASS/FAIL |
| 8. Inspect the headphone port for damage or corroded contacts | 58. RF test LTE PASS/FAIL |
| 9. Audio Headphone Microphone THD 0.XXX% | 59. RF Test WCDMA PASS/FAIL |
| 10. Audio Headphone Speaker Left THD 0.XXX% | 60. RF TX EVM RMS X.X% |
| 11. Audio Headphone Speaker Right THD 0.XXX% | 61. RF TX Frequency Error XX.X Hz |
| 12. Audio Rear Speaker THD X.XXX% | 62. RF TX Phase Error RMS 0.X deg |
| 13. Audio Top Microphone THD X.XXX% | 63. Rooting KNOX |
| 14. Auto Trust | 64. Video Camera Zoom In and Out |
| 15. Battery Capacity XXX.X% | 65. Battery Fast/Rapid Charge Function |
| 16. Battery Charged Battery Level XX% | 66. Blacklist/Financial Lock Status |
| 17. Battery Charging Current Min/Max X.XX A / X.XX A | 67. Sensor Iris Test Function |
| 18. Battery Lifetime Batter Cycles XXX | 68. Rooting/Jailbreak Check for Apple iOS^{™} |
| 19. Battery Status Green = PASS / Red = FAIL | 69. Grip Sensor Function |
| 20. Battery State of Health: % with PASS/FAIL | 70. Charge in a Powered Off State and Powered On State |
| 21. Inspect the Charge Port for Any Signs of Physical or Liquid Damage | 71. S Pen |
| 22. Bluetooth PASS/FAIL | 72. SD |
| 23. Button Keys Sub Keys Test (Volume Keys, Home Key, Power Key, Silent Key, Bixby, Mute) | 73. Sensor Accelerometer Sensor PASS/FAIL |
| 24. Call Timer | 74. Sensor Barometer Sensor PASS/FAIL |
| 25. Color of Unit: #XXXXXX | 75. Sensor Gyro Sensor PASS/FAIL |
| 26. Data Wipe (Quick Wipe Only) | 76. Sensor HRM Sensor |
| 27. Data Wipe Reset Factory Rest/Settings Restore PASS/FAIL | 77. Sensor Light Sensor Test |
| 28. Data Wipe or Flash > Auto Trust > Install Wi-Fi Profile and App | 78. Sensor Proximity, Hall Effect, Magnetic Sensor PASS/FAIL |
| 29. Device Under Test ("DUT") Result: PASS | 79. Sensor Facial Recognition |
| 30. Flashlight PASS/FAIL | 80. Sensor Iris |
| 31. GPS | 81. SIM Test PASS/FAIL |
| 32. IMEI / Mobile Equipment Identifier ("MEID") / Electronic Serial Number ("ESN") Code: XXXXXXXXXXXXXXX | 82. Test Duration: X:XX |
| 33. IRAT Handover PASS/FAIL | 83. Test Verification Certificate |
| 34. LDI Test; Verify that placement of the LDI is correct and that it is not red or discolored. | 84. Touch ID; Fingerprint |
| 35. LED Test | 85. Touch Force (3D) Touch PASS/FAIL |
| 36. Lock FRP / FMIP | 86. Touch Taptic Engine PASS/FAIL |
| 37. mOS: Apple iOS^{™} / Android^{™} | 87. Touch Touchscreen PASS/FAIL |
| 38. Memory: Size of Memory: XXX GB | 88. Enable Verizon Hidden Menu Mode |
| 39. Model No.: XXXXX | 89. Vibrator Test |
| 40. Device Serial Number: XXXXXXXXXXX | 90. Video Dimming |
| 41. Nest Operator ID: XXXXX | 91. Video Front Camera / Picture Test |
| 42. Nest Slot ID XXX Initial Battery Level XX% | 92. Video Front Camera / Video Test |
| 43. Nest Station Serial Number: XXXXXXXXXXX | 93. Video Grading A, B+, B, C, E |
| 44. NFC Test PASS/FAIL | 94. Video Rear Camera / Video Test |
| 45. Software Version | 95. Video Rear Camera / Picture Test |
| 46. OS Final OS Version XX | 96. Video Screen Brightness Adj. PASS/FAIL |
| 47. OS Flash Test | 97. Video Screen Quality (RGB, Damage) PASS/FAIL |
| 48. OS Upgrade Status ENABLED | 98. WIFI (2.4 GHz and 5 GHz) PASS/FAIL |
| 49. OS: iOS 10 | 99. Wireless Charge |
| 50. Part No.: XXXXX LL/A | |

Each computerized pallet contains a solenoid-controlled pedestal to manipulate a mobile telecommunication device under test (DUT) up or down, and solenoid-controlled grippers for DUTs operating either Apple iOS^{™} or Android^{™} mobile operating systems. Each computerized pallet contains DUT slots for any DUT operating either Apple iOS^{™} or Android^{™} mobile operating systems. Some slots in the computerized pallet may be run empty, based on availability of DUTs received for processing. Further, each computerized pallet contains sixteen (16) DUT slots. Each individual DUT in a computerized pallet is accessible using DUT location in the computerized pallet. Individual DUTs in a specific computerized pallet are accessed, identified, labeled, and subsequently controlled as DUT number 0 through DUT number 15.

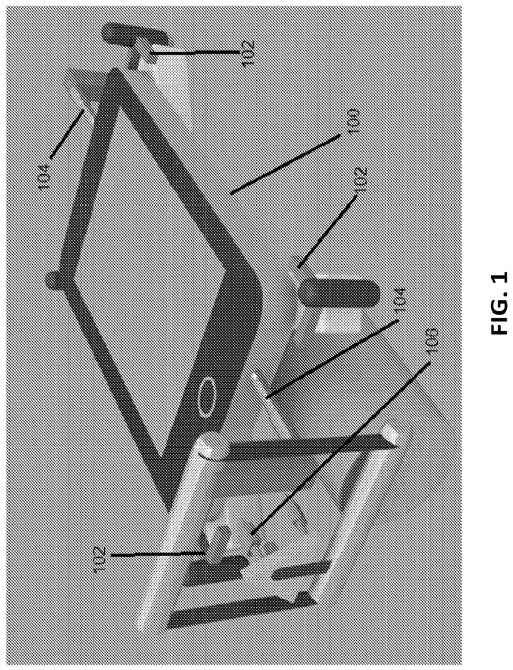

An exemplary embodiment of a solenoid-controlled pedestal for an individual DUT 100 is provided in **FIG. 1****.** Solenoid-controlled grippers **102** confront the corners of the individual DUT **100.** When an individual DUT **100** is placed on a computerized pallet, the individual DUT **100** ports are examined for determination of the individual DUT **100** type and form factor, and the proper data jack(s) **106** and audio jack(s) **104** are automatically inserted into the individual DUT 100.

Each DUT in a computerized pallet is operated on independently of all other DUTs. Each DUT will be identified by the IMEI, Model Type, and Tracking Information for that specific DUT. The BPM System has preloaded requirements for each test that a first specific customer requires for a first specific DUT, which may be completely unique and different from the preloaded requirements for each test that a second customer requires for a second specific DUT in the processing system according to an embodiment described in this Example. All diagnostic test results data and status are collected and uploaded to the BPM System at each individual testing station in order to maintain a running log for a specific DUT.

Each computerized pallet is physically fixed to the conveyor and moves on the conveyor. There are sixteen (16) pallets on the conveyor, corresponding to the 16 positions of the stadium shape of the conveyor, and computerized pallets are tracked and labeled as Pallet number 0 through Pallet number 15. Each lane has eight (8) of the computerized pallets, and moves in a clockwise direction around half of the stadium conveyor. The lanes are labeled Lane A and Lane B. The computerized pallet movement will be controlled by the MCS, and each computerized pallet will move in sequence from one individual testing station to the next individual testing station with variable timing. Each computerized pallet remains at an individual testing station for approximately four minutes before moving in sequence to the next individual testing station.

At the beginning of each lane, individual DUTs are loaded onto the computerized pallet in each DUT slot by a manual operator. When an individual DUT is placed on a computerized pallet, the DUT ports are automatically examined by a photometric system and Bluetooth^{™} identification, which determines the DUT type, form factor, and loads testing applications. The individual DUT is then lifted, and the proper data, power, and audio jacks are automatically inserted.

An individual DUT is not required to have a charged battery. A data/charging cable is automatically inserted into each individual DUT that initiates the DUT, enabling the DUT to use a current threshold, overcoming the requirement for a charged battery. Without being bound by theory, most commercially available mobile telecommunication devices contain a data interface in the charging path to the charging control circuitry on the device. The data/charging cable automatically inserted into each individual DUT is connected to a smart hub that conforms to SmartCharge 3 and 4, which, without being bound by theory, allows for bypassing the battery within the DUT and allows the USB power to directly interface with the DUT. As soon as the DUT is connected to the smart hub, the DUT and power are accessed directly via USB.

An individual computerized pallet proceeds through eight (8) individual testing stations in a lane, labeled individual testing station 1 ("ITS1") through individual testing station 8 ("ITS8"), with the processing steps occurring at each individual testing station according to an embodiment described in this Example provided in Table 4 below. The processing steps at each individual testing station may vary from the arrangement provided in Table 4 below.

**TABLE 4**

| Processing Steps at Individual Testing Stations | |
|---|---|
| Individual Testing Station No. | Processing Step at Individual Testing Station |
| 1 | Unprocessed mobile telecommunication device loading station. Find My iPhone ("FMIP") check performed (for devices operating Apple iOS^{™}). MTD identification is read, form factor and connector location are assessed, device form factor gripping specifications are assessed, photometric connection location is determined, connectors are inserted, mobile operating system version is determined, and battery health is determined. |
| 2 | Data wipe execution station and mobile operating system Flash, if needed (X-Y Bot) |
| 3 | Functional Diagnostic Test Station (X-Y Bot) |
| 4 | Functional Diagnostic Test Station (X-Y Bot) |
| 5 | Functional Diagnostic Test Station (X-Y Bot) |
| 6 | Cosmetic Grading Station and Audio Testing |
| 7 | Cosmetic Grading Station and Audio Testing |
| 8 | Processed mobile telecommunication device unloading station |

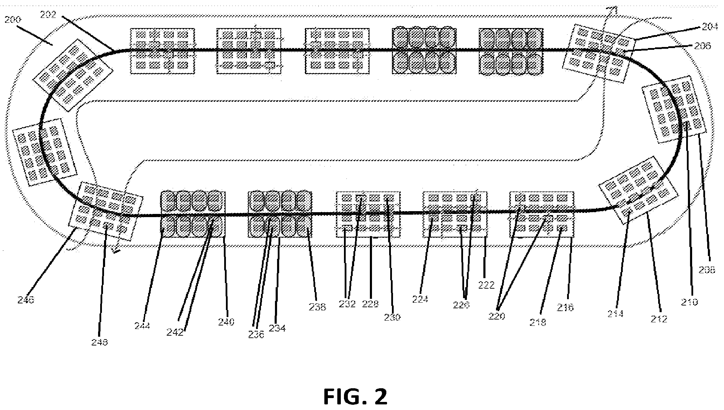

An exemplary embodiment of a conveyorized system **200** is shown in **FIG. 2****.** Computerized pallets **204, 208, 212, 216, 222, 228, 234, 240, 246** are physically fixed to conveyor **202** and move on the conveyor **202.** According to the embodiment shown in **FIG. 2****,** there are 16 pallet positions on the stadium-shaped conveyor **202,** such that computerized pallets **204, 208, 212, 216, 222, 228, 234, 240, 246** run in one lane of eight positions making up half of the conveyor **202,** while eight counterpart pallets make up the other lane of eight positions making up the other half of the conveyor **202.** Computerized pallets **204, 208, 212, 216, 222, 222, 228, 234, 240, 246** each completely revolve around the entire length of conveyor **202** following the processing of two pluralities of unprocessed mobile telecommunication devices **206.** For simplification, **FIG. 2** focuses on one cycle of processing a plurality of unprocessed mobile telecommunication devices **206** in only one lane of the conveyor **202.** When computerized pallet **204** is in position at a first individual testing station, processed mobile telecommunication devices are unloaded, and a plurality of unprocessed mobile telecommunication devices **206** is loaded into the computerized pallet **204.** In the exemplary embodiment shown in **FIG. 2****,** a plurality of mobile telecommunication devices may include up to 16 mobile telecommunication devices.

Computerized pallet **208** has moved from the first individual testing station to the second individual testing station, and a plurality of mobile telecommunication devices **210** at the second individual testing station may be data-wiped and their mobile operating systems flashed, as well as have at least one diagnostic test performed on one or more individual mobile telecommunication devices of the plurality of mobile telecommunication devices **210.**

Computerized pallet **212** is in position at the third individual testing station, and a plurality of mobile telecommunication devices **214** at the third individual testing station have at least one diagnostic test performed on one or more individual mobile telecommunication devices of the plurality of mobile telecommunication devices **214.**

Computerized pallet **216** is in position at the fourth individual testing station, and a plurality of mobile telecommunication devices **218** at the fourth individual testing station have at least one diagnostic test performed on one or more individual mobile telecommunication devices of the plurality of mobile telecommunication devices **218.** The fourth individual testing station is equipped with one or more X-Y arms **220,** for performing diagnostic tests such as a Device Touch Screen diagnostic test wherein one of the one or more X-Y arms **220** must confront a touch screen of an individual mobile telecommunication device from among the plurality of mobile telecommunication devices **218** at a particular position on the touch screen.

Computerized pallet **222** is in position at the fifth individual testing station, and a plurality of mobile telecommunication devices **224** at the fifth individual testing station have at least one diagnostic test performed on one or more individual mobile telecommunication devices of the plurality of mobile telecommunication devices **224.** The fifth individual testing station is equipped with one or more X-Y arms **226,** for performing diagnostic tests such as a Device Touch Screen diagnostic test wherein one of the one or more X-Y arms **226** must confront a touch screen of an individual mobile telecommunication device from among the plurality of mobile telecommunication devices **224** at a particular position on the touch screen.

Computerized pallet **228** is in position at the sixth individual testing station, and a plurality of mobile telecommunication devices **230** at the sixth individual testing station have at least one diagnostic test performed on one or more individual mobile telecommunication devices of the plurality of mobile telecommunication devices **230.** The sixth individual testing station is equipped with one or more X-Y arms **232,** for performing diagnostic tests such as a Device Touch Screen diagnostic test wherein one of the one or more X-Y arms **232** must confront a touch screen of an individual mobile telecommunication device from among the plurality of mobile telecommunication devices **230** at a particular position on the touch screen.

Computerized pallet **234** is in position at the seventh individual testing station, and each pair of mobile telecommunication devices **236** of a plurality of mobile telecommunication devices on computerized pallet **234** has a small enclosure **238** deployed over each pair of mobile telecommunication devices **236** to provide for audio and ambient light isolation for testing and machine vision photometric grading of each pair of mobile telecommunication devices **236.**

Computerized pallet **240** is in position at the eighth individual testing station, and each pair of mobile telecommunication devices **242** of a plurality of mobile telecommunication devices on computerized pallet **240** has a small enclosure **244** deployed over each pair of mobile telecommunication devices **242** to provide for audio and ambient light isolation for testing and machine vision photometric grading of each pair of mobile telecommunication devices **242.**

Computerized pallet **246** is in position at the ninth individual testing station, and a plurality of processed mobile telecommunication devices **248** is unloaded from the computerized pallet **246.** Subsequently, a plurality of unprocessed mobile telecommunication devices is loaded into the computerized pallet **246** for processing in the second lane of the conveyor **202.**

Computerized pallets move from individual testing station to individual testing station approximately every four (4) minutes. Movement interval of computerized pallets from individual testing station to individual testing station is variable, and controlled by MCS software. In certain instances, some individual testing station operations may take longer than approximately four (4) minutes, in which case, the computerized pallet proceeds to the subsequent individual testing station by control of the system software, where the diagnostic tests interrupted at the previous individual testing station are reinitiated.

Generally, computerized pallet activities are designed such that all operations for each DUT are completed within four minutes. If diagnostic test operations are not completed within approximately four minutes, the diagnostic tests are completed at the subsequent individual testing stations. Each of individual testing stations 2-7 according to Table 4 above are capable of executing the same set of diagnostic tests, and after two unsuccessful attempts at any individual diagnostic test on an individual DUT, wherein the diagnostic test cannot successfully complete, the diagnostic test is logged as a failure. Individual testing stations 6 and 7, according to Table 4 above, are equipped with sound and ambient light isolation boxes that are automatically placed over multiple DUTs at once.

Each individual DUT in an individual DUT slot within a computerized pallet is held securely in place using grippers. When each individual DUT is placed in an individual DUT slot, the system automatically inserts the proper connectors for that DUT model whereby the model form factor is determined by lookup. The lookup function determines the proper form factor and then grippers automatically position to the proper form factor and hold the individual DUT in position securely.

Each individual DUT in a computerized pallet is connected to a PC brick "headless" Embedded Controller ("EC") mounted beneath the computerized pallet. Each EC has, in an exemplary embodiment, the following specifications: Windows 10 IOT Enterprise; Intel i7 Gen 7/8 Desktop Processor 3.4 GHz 8 Cores; 64 GB RAM; 1 TB SSD Hard Drive; 2 USB 3.0 Ports; WiFi Controller; Bluetooth Controller; Ethernet LAN Port. The DUT controller serves as the "last mile" of the control for an individual DUT. The DUT controller is controlled by the BPM System and enables the BPM system to receive information and initiate operations on individual DUTs. The DUT controller is directly connected to switches and third-party peripheral equipment through USB and/or GPIO connection. A DUT controller may interact with the MCS and visual system directly or through the BPM. Computerized pallets record the DUT identification of each individual DUT that is present in a computerized pallet. Based on the DUT identification, the computerized pallet retains the make and model of each individual DUT in each slot. The port position is at the top or bottom of the DUT controller.

Each DUT slot in a computerized pallet has an audio connector jack (i.e., female 3.5-millimeter traditional headphone connection). Alternatively, an audio connector is in an audio fixture. Based on DUT make and model, the position of an audio jack is detected automatically. An audio connector jack position may be at the top or the bottom of a DUT, or may not be present at all, as some commercially marketed mobile telecommunication devices incorporate audio capabilities into a data connector.

Computerized pallets are capable of rotating each DUT independently in two dimensions (i.e., x-axis, y-axis). Each DUT in a computerized pallet is capable of being flipped horizontally and/or vertically so as to enable various functional and cosmetic diagnostic tests.

Each DUT slot in a computerized pallet has charging indicators. When an individual DUT is loaded into a DUT slot in a computerized pallet, based on the charging level of the individual DUT, a charging indicator light glows red or green. In an embodiment, if the charging level of an individual DUT is greater than, for example, 20%, the charging indicator light grows green; otherwise the charging indicator light glows red. In other embodiments, the charging level at which the charging indicator light glows green or red can be configured to reflect that the charging level of an individual DUT is greater than, or less than or equal to, a different desired percentage.

Each DUT slot allows any form factor of DUT as listed in the exemplary Supported Device List, which lists devices that can be processed by the embodiment described in this Example, as provided in Table 5 below. Each individual DUT is identified by its DUT identification, which is available to the computerized pallet system. The DUT controller attempts to detect individual DUTs by their Bluetooth signatures using the DUT controller's Bluetooth module, so as to provide another method of detection for the MCS System during the loading phase, before individual DUTs are physically connected. The Bluetooth detection augments the photometric system detection and verifies to 100% by the USB cable detection that occurs during the successful loading of an individual DUT into a computerized pallet.

Computerized pallets are powered by lithium-ion batteries located beneath each computerized pallet. Each computerized pallet individual testing station will automatically connect a charger to the lithium-ion batteries powering each computerized pallet to recharge the lithium ion batteries while the computerized pallets are stationary at individual testing stations. The lithium-ion batteries can be easily removed and replaced. In an exemplary embodiment, a lithium-ion battery powering a computerized pallet may be the M18 Battery Pack, 18 V, 9.0 Ah, Li-Ion MILWAUKEE 48-11-1890.

In an exemplary embodiment, the power budget per computerized pallet has the following specifications. A computer brick consumes 90 W of power at 18 Volts, which is equivalent to 5 A at 18 Volts. In an embodiment, the sixteen (16) phones in a computerized pallet, each of which consumes 18 W, in total consumes 288 Watts at 5 Volts or 57.6 Amps. With miscellaneous lights, the total power consumption is approximately 26 Amps at 18 V.

An embedded controller (EC) communicates with the MCS System as to which lane the respective computerized pallet belongs, and each individual testing station identifies the individual testing station the computerized pallet is stationary at during diagnostic testing. A computerized pallet EC communicates with the conveyor through the MCS system as to which lane of the conveyor the computerized pallet is positioned in. A computerized pallet EC continuously updates the MCS System on the current state of the computerized pallet. A computerized pallet EC updates the MCS System when diagnostic testing begins or concludes, respectively, upon the computerized pallet arriving at or departing from an individual testing station. A computerized pallet EC also communicates the current diagnostic testing status of each individual DUT to the MCS System.

Computerized pallets remain continuously physically connected by LAN connection. A computerized pallet EC is connected via USB 3.0 or lightning port to individual DUTs in each DUT slot. A computerized pallet EC is then connected to a local high-speed USB 3.0 hub. Each computerized pallet has its own WiFi access point that communicates to the BPM and the MCS System. In an exemplary embodiment, the USB hubs on each computerized pallet are dual eight port programmable, software-controlled, industrial USB 3.0 hubs with 8 fast-charging (4A) ports, 2 host connections, and a dedicated port for control and monitoring, for example, Acroname programmable Industrial USB 3.0 Hub (8 Ports) Model S79-USBHUB-3P. In specific situations in which individual DUTs cannot be connected physically, such individual DUTS interact over device WiFi. Such specific situations include, but are not limited to: when an individual DUT is subjected to a wireless charging test; when an individual DUT is subjected to gyroscope and accelerometer tests in which the individual DUT needs to remain unconnected while being rotated on different axes; when an individual DUT is within an audio test chamber; and when an individual DUT is within a cosmetic grading diagnostic test enclosure.

A DUT controller is physically connected to a multiport USB hub, a GPIO device either over USB or through an embedded controller for controlling LED lights and input from physical button(s), a LAN using WiFi, and third-party equipment for example, including, but not limited to, XY arms, MCS System components, and/or photometric components, through USB, LAN, or the BPM. A DUT controller directly communicates and logs and/or reports to the BPM the current computerized pallet state, each start and stop of diagnostic testing, and the diagnostic test status of each individual DUT. Further, a DUT controller creates a local WiFi network, if a local access point is not used. A DUT controller directly controls DUTs via USB, through a high-speed USB hub, as the preferred means of communication. A DUT controller directly controls DUTs via WiFi or Bluetooth, in scenarios in which DUTs cannot be tethered, for example, including, but not limited to: when an individual DUT undergoes a wireless charging diagnostic test; when an individual DUT undergoes gyroscope and/or accelerometer diagnostic tests; when an individual DUT is within an audio test chamber; and when an individual DUT is within a cosmetic grading test enclosure.

Each individual DUT is processed independently from all other DUTs in the system. Individual DUTs are not required to be run in batches specific to a single customer. Individual DUTs from multiple different customers can be run concurrently with all DUT statuses maintained by the MCS System. Each individual DUT has the suite of tests to be performed on such individual DUT preloaded into the BPM System prior to execution. The BPM System processes each individual DUT independently, in the sense that individual DUTs may require processing differently, according to a specific customer, specific features, and/or specific make and model. The selection of diagnostic tests and processes is automatically performed by the BPM System according to a preconfigured set of rules loaded into the BPM System. An operator does not need to take an individual customer's requirements and/or limitations, or other requirements and/or limitations, when loading the system, and different customer orders are processed simultaneously without any required operator attention.

In an embodiment, the DUT controller software uses a specific framework for hardware abstraction layer (HAL), DUT connectivity, virtualization technology, inherent integration with the BPM System, logging, and reporting. This framework allows the connection of multiple variations of mobile telecommunication devices and peripherals to one DUT controller, without interference. One DUT controller can process a minimum of 16 DUTs in parallel, including data-consuming actions such as software flashing. One DUT controller can process DUTs that are capable of operating mobile operating systems including, but not limited to, both Apple iOS^{™} and Android^{™}. Separation between individual DUTs operating different mobile operating systems, or DUTs of different makes or models, on a single DUT controller, is not necessary.

Individual DUTs can be accessed, identified, labeled, and subsequently controlled as computerized pallets 0-15, and DUTs 0-15.

In an embodiment, at a loading station, mobile telecommunication devices are loaded into a pallet in the DUT slots. The individual DUTs are in the powered ON state, if possible. Each individual device will show a QR Bar Code on the device display. The QR Bar Code is established at the receiving station prior to reaching the system described herein. The QR Bar Code is created as the operational screen saver on an individual DUT so that when the individual DUT is powered ON, the QR Bar Code is displayed automatically. Software at the receiving station, after an individual DUT is plugged in, reads all data about the individual DUT from low-level operating system commands that obtain all model, operating system, and critical information from the individual DUT and then creates a QR Bar Code that is displayed as the operational screen saver of the individual DUT and remains with the individual DUT for the duration of its processing. A physical QR Bar Code label is also printed and attached to an individual DUT if the individual DUT has a display issue. The QR Bar Code is analyzed by a QR Bar Code Scanner and used to communicate with the MCS System, which will then communicate with the BPM System to log the make and model of the individual DUT read from the device identification. Each individual DUT in a computerized pallet is always physically connected over USB 3.0 and kept on charge, except for the WiFi connectivity scenarios, for example, those described above in paragraphs **[0081]** and **[0082].** For DUTs operating an Apple iOS^{™} mobile operating system, a FMIP check is performed. If an individual DUT is FMIP-locked, then the locked status is indicated on the display of the individual DUT and the individual DUT is removed from the DUT slot and computerized pallet. For DUTs operating an Apple iOS^{™} mobile operating system, each individual DUT must connect to the Apple server when an application initiates for verification purposes. Touch points can be performed using the internal diagnostic testing applications, but initial touch points may require an X-Y arm to hit touch points before an application can execute. Accordingly, such individual DUTs operating an Apple iOS^{™} mobile operating system are trusted and activated using an X-Y arm. An MCE testing application with data-wipe is loaded into the individual DUT. The MCE testing application is executed and all local digital media storage on the individual DUT is erased. If an individual DUT is operating on an old mobile operating system that is not the latest release of the mobile operating system, the individual DUT may be flashed with the latest firmware release. The current charge of the individual DUT is detected, and for example, if the charging level is less than 20%, the red LED light indicator is illuminated on the DUT slot. The DUT chargers used in the system are intelligent fast chargers capable of 3.5 Amps per DUT. Each individual DUT charging status is available in the user interface that can be selected through the BPM System. Each individual DUT is processed as an individual entity, regardless of other DUTs from other customers, in which the tests to be performed on an individual DUT are selected by a customer beforehand and loaded into the BPM System. Each individual DUT has its SIM card tested prior to the individual DUT being loaded onto the computerized pallet. Additionally, extra stickers and dirt are removed.

An exemplary list of mobile telecommunication devices that can be processed according to an embodiment described in this Example is provided in Table 5. It is expected that the embodiment described in this Example can be implemented to process other mobile telecommunication devices yet to be released that are capable of operating Apple iOS^{™}, Android^{™}, or another mobile operating system capable of being installed on a mobile telecommunication device. Further, the term "mobile telecommunication device" is not to be understood to be limited to, or specifically characterized by, the list provided in Table 5.

**TABLE 5**

| Apple | |
|---|---|
| iPhone 6 | iPhone 5S GSM |
| iPhone 6S | iPhone 6 Plus |
| iPhone 7 | iPhone 6S Plus |
| iPhone 8 | iPhone 7 Plus |
| iPhone SE | iPhone 8 Plus |
| iPhone XS | iPhone X |

| Samsung | |
|---|---|
| Galaxy A6 | Galaxy S10 Plus |
| Galaxy A8 | Galaxy A7 (2018) |
| Galaxy J3 | Galaxy Grand Prime |
| Galaxy Note 8 | Galaxy Note 5 |
| Galaxy S10 | Galaxy Note 9 |
| Galaxy S5 | Galaxy S4 |
| Galaxy S6 | Galaxy S5 Active |
| Galaxy S7 Active | Galaxy S7 |
| Galaxy S8 | Galaxy S7 Edge |
| Galaxy S9 | Galaxy S8 Plus |
| Galaxy Tab E | Galaxy S9 Plus |

| LGE | |
|---|---|
| V35 ThinQ | V40 ThinQ |
| G7 fit | G7 ThinQ |
| Stylo 4+ | Tribute |
| Rebel 4 LTE | Stylo 4 |

| Motorola | |
|---|---|
| Moto G6 | Moto G7 Power |
| Moto G7 Plus | Moto G7 Play |
| Moto Z2 Play | Moto E5 |
| Moto G6 Plus | Moto Z3 Play |
| Moto E5 Plus | Moto Z2 Force |
| Moto G7 | |

| Google | |
|---|---|
| Pixel 3 | Pixel 3 XL |
| Pixel 2 | Pixel 2 XL |

In an embodiment, according to a Data-Wipe Execution, the data-wipe and/or flashing processes are available at each individual testing station. During the data-wipe and/or flashing processes, the charge level of each individual DUT is detected and compared with the initial charge level recorded for that individual DUT. If for an individual DUT, the rate of charging is slow and/or the battery health is poor, a red LED light is indicated on the corresponding individual DUT slot. Individual DUTs with red LED lights indicated on the corresponding DUT slots are removed by an operator. If the duration of data-wipe and/or flashing processes is longer than approximately four minutes, then computerized pallet movement to a subsequent individual testing station may be delayed. Once the data-wipe process for an individual DUT is completed, a MCE Diagnostics application is installed on the individual DUT. Further, a WiFi profile is installed on the individual DUT, but the individual DUT is not connected to WiFi. A Data-Wipe Execution result, along with any generated data, is uploaded to the BPM System.

In an embodiment, according to a Device Touch Screen diagnostic test, each individual DUT is tested using an external X-Y Cartesian device ("X-Y arm"). The Device Touch Screen diagnostic test recognizes a touch event over an area of each individual DUT screen. A pattern of squares is drawn on the individual DUT screen, and the Device Touch Screen diagnostic test determines if touch points displayed on the individual DUT screen correlate properly to the positions that a digitizer determines for the same touch points. Three-dimensional touch is detected using the X-Y arm. The arm presses buttons with specific pressures, and an application on each individual DUT determines PASS/FAIL. A Device Touch Screen diagnostic test result, along with any generated data, is uploaded to the BPM System.

In an embodiment, according to a WiFi diagnostic test, for each individual DUT, the WiFi is initiated and the individual DUT attempts to scan for and detect a WiFi Access Point Name ("APN"). Once the WiFi diagnostic test on an individual DUT is completed, the WiFi is turned off. A WiFi diagnostic test result, along with any generated data, is uploaded to the BPM System.

In an embodiment, according to a Bluetooth diagnostic test, for each individual DUT, the Bluetooth is initiated and the individual DUT scans for proximal Bluetooth devices. An individual DUT attempts to detect names of Bluetooth accessories configured during application installation. Subsequent to completion of the Bluetooth diagnostic test on an individual DUT, the Bluetooth is turned off. A Bluetooth diagnostic test result, along with any generated data, is uploaded to the BPM System.

In an embodiment, according to a Magnetometer sensor diagnostic test, for each individual DUT, magnetometer sensor values are retrieved and analyzed to determine whether the values are within a configured range. A Magnetometer sensor diagnostic test result, along with any generated data, is uploaded to the BPM System.

In an embodiment, according to a GPS diagnostic test, for each individual DUT, an application determines if location services are activated for an individual DUT. If location services are activated, the individual DUT begins scanning for GPS coordinates. If location services are inactive, the individual DUT location services are activated and then the GPS diagnostic test is executed on the individual DUT. Location services are deactivated on the individual DUT subsequent to the GPS diagnostic test. A GPS diagnostic test result, along with any generated data, is uploaded to the BPM System.

In an embodiment, according to a Near-Field Communication ("NFC") diagnostic test, for each individual DUT, the NFC feature is activated. The individual DUT is placed on a NFC tag to determine if the NFC tag can be detected. NFC is deactivated subsequent to the NFC diagnostic test. A NFC diagnostic test result, along with any generated data, is uploaded to the BPM System.

In an embodiment, according to a Wireless Charging diagnostic test, for each individual DUT, the wireless charging feature is activated. The individual DUT is placed on a wireless charger, and the charge current of the individual DUT is detected. Following execution of the Wireless Charging diagnostic test, the wireless charging feature on the individual DUT is deactivated. A Wireless Charging diagnostic test result, along with any generated data, is uploaded to the BPM System.

In an embodiment, according to a Camera diagnostic test(s), for each individual DUT, the camera flash is activated and the camera flash is detected by determination of the changes in luminance levels. The camera flash is detected by the ambient light sensor on the individual DUT. Rear and front camera image capture on each individual DUT are triggered using an X-Y arm and verified against reference images. Rear and front camera videos on each individual DUT are triggered using an X-Y arm and the video and record sound are verified by a photometric system. One or more Camera diagnostic test(s) result(s), along with any generated data, is uploaded to the BPM System. The rear and front camera video and audio recorded in the Camera diagnostic test(s) are verified by the Vision System.

In an embodiment, according to a Button Keys Sub Keys diagnostic test, the volume up/down and power hard keys on each individual DUT are verified using hard key actuators. A Button Keys Sub Keys diagnostic test result, along with any generated data, is uploaded to the BPM System.

In an embodiment, according to a Sensor Accelerometer Sensor diagnostic test, accelerometer sensors on each individual DUT are tested by moving the individual DUT between landscape and portrait orientations, and accelerometer sensor readings for an individual DUT are verified if the readings fall within a desired threshold range. A Sensor Accelerometer Sensor diagnostic test result, along with any generated data, is uploaded to the BPM System.

In an embodiment, according to a Sensor Gyro Sensor diagnostic test, gyroscope sensors on each individual DUT are tested by moving the individual DUT between landscape and portrait orientations, and gyroscope sensor readings for an individual DUT are verified if the readings fall within a desired threshold range. A Sensor Gyro Sensor diagnostic test result, along with any generated data, is uploaded to the BPM System.

In an embodiment, according to a Sensor Light Sensor diagnostic test, the ambient light sensor of each individual DUT is tested by analyzing sensor luminance values of the environment surrounding the individual DUT. The ambient light sensor of the individual DUT is covered by a black plastic block, and changes in ambient light sensor values are detected. A Sensor Light Sensor diagnostic test result, along with any generated data, is uploaded to the BPM System.

In an embodiment, at an Audio Test Station, the 3.5-millimeter female audio jack connector of each individual DUT with a 3.5-millimeter female audio jack is tested by inserting a 3.5-millimeter male audio jack connector of a headset into the 3.5-millimeter female audio jack of the individual DUT and subsequently removing the 3.5-millimeter male audio jack connector. The 3.5-millimeter male audio jack connector should be detected within the 3.5-millimeter female audio jack connector of the individual DUT. A diagnostics application on the individual DUT plays back a specific reference audio file, and the Audio Test Station determines PASS/FAIL if an input is within the required decibel ("dB") specific range. The Audio Test Station plays back a test audio speech and sound file, and the test audio speech and sound file is recorded using a microphone of the headset. The test audio speech and sound file is played back and the Audio Test Station determines PASS/FAIL based on the dB range. One or more Audio Test Station diagnostic test(s) result(s), along with any generated data, is uploaded to the BPM System.

In an embodiment, according to an Earpiece diagnostic test, the earpiece of each individual DUT is tested by an application that plays back a specific audio file, and an audio analyzer records the specific audio file. The audio analyzer determines PASS/FAIL based upon whether the input is detected within the required specific dB range. An Earpiece diagnostic test result, along with any generated data, is uploaded to the BPM System.

In an embodiment, according to a Loudspeaker diagnostic test, the loudspeaker of each individual DUT is tested by an application that plays back a specific audio file, and an audio analyzer records the same. The audio analyzer determines PASS/FAIL based upon whether the input is detected within the required specific dB range. A Loudspeaker diagnostic test result, along with any generated data, is uploaded to the BPM System.

In an embodiment, according to a Microphone diagnostic test, for each individual DUT, a diagnostics application records a specific audio file from the rear microphone, the front microphone, and the bottom microphone. An audio analyzer determines PASS/FAIL based upon whether the input is detected within the required specific dB range. A Microphone diagnostic test result, along with any generated data, is uploaded to the BPM System.

In an embodiment, according to a Vibration diagnostic test, for each individual DUT, an application vibrates the individual DUT, and an audio analyzer determines PASS/FAIL based upon whether the vibration is detected within the required specific range. A Vibration diagnostic test result, along with any generated data, is uploaded to the BPM System.

In an embodiment, at a Cosmetic Grading Station, all external stickers on each individual DUT are removed manually to ensure that the entire surface of the individual DUT is visible and can be cosmetically graded. Further, the individual DUT is cleaned as necessary. In certain embodiments, each individual DUT can be cleaned automatically in a separate processing step, in order to avoid incorrect grading. At a Cosmetic Grading Station, a chamber is capable of capturing images of all 6 sides of an individual DUT. Each individual DUT is removed from the grippers and held using suction cups or another appropriate mechanism. The images of all 6 sides of the individual DUT are analyzed by a grading analyzer based upon the number and size(s) of scratch(es)/wear and tear/dent(s)/ding(s)/discoloration(s) on the individual DUT. An appropriate grade is given to the individual DUT based upon defined Grading Criteria provided, for example, in Table 6 below. Grading criteria are configurable in the BPM System software. A Cosmetic Grading Station can distinguish among dust particles, chips, dents, foreign material, fingerprints, light transmission performance material, glass, and covers. A Cosmetic Grading Station can determine the depth and width of a scratch. All Cosmetic Grading Station diagnostics results, along with any generated data, is uploaded to the BPM System.

In an embodiment, according to a LCD color diagnostic test, each individual DUT display screen is progressively filled with five individual colors. A vision system verifies if the individual DUT display screen properly displays each of the individual colors. The computerized pallet EC controller controls each individual DUT to display the different individual colors. A LCD color diagnostic test result, along with any generated data, is uploaded to the BPM System.

In an embodiment, according to a LCD dimming diagnostic test, each individual DUT display screen is tested for whether the individual DUT display screen is capable of dimming. The computerized pallet EC controller controls each individual DUT to dim the individual DUT display screen. A LCD dimming diagnostic test result, along with any generated data, is uploaded to the BPM System.

In an embodiment, according to a LCD ghosting diagnostic test, each individual DUT display screen is progressively filled with five individual colors. A vision system verifies if the individual DUT display screen demonstrates any "ghost effect" (i.e., an outline of a previous image that can be seen super-imposed over the current image on the individual DUT display screen). A LCD ghosting diagnostic test result, along with any generated data, is uploaded to the BPM System.

In an embodiment, according to a LCD dead pixel diagnostic test, each individual DUT display screen is progressively filled with five individual colors. A vision system verifies if the individual DUT display screen demonstrates any "dead pixels" *(e.g.,* a pixel remains black while the rest of the individual DUT display screen displays white). Depending on the individual DUT display technology and/or screen chemistry, a dead pixel may demonstrate a color other than black. A LCD dead pixel diagnostic test result, along with any generated data, is uploaded to the BPM System.

In accordance with the embodiment as described in this Example, an exemplary audio and triage grading criterion is provided below in Table 6. The embodiment as described in this Example may be configured with other audio and triage grading criteria.

**TABLE 6**

| Audio and Triage Criteria | | Grading | | | | |
|---|---|---|---|---|---|---|
| Flag | Description | A | B | B- | C | D |
| Visual - Spotless | Pristine. No cosmetic flaws when viewed from 18 inches. | Y | N | N | N | Y/N |
| Housing Damage | Cracked, broken, warped, and/or missing housing, buttons, and/or keys. | N | N | N | Y | Y/N |
| Liquid Damage Indicator ("LDI") Tripped | LDI sticker is more than 50% red, showing possible liquid damage. | N | N | N | Y | N |
| | Check on DUT only. Missing LDI is not a failure. | | | | | |
| Electrical Connector Damage | Cracked, broken, corrosion on charging port, SIM, and/or battery terminal contacts. | N | N | N | Y | Y/N |
| Cracked Screen | Cracked or broken main display and/or caller ID display. | N | N | N | Y | Y/N |
| Cracked Camera Lens | Cracked or broken camera lens. | N | N | N | Y | Y/N |
| Powers On and Off | DUT will power on and off using the power button. | Y | Y | Y | Y | N |
| Black Listed | DUT is confirmed as not blacklisted via third-party tool. | Pass | Pass | Pass | Pass | Fail |
| Boot Fail | Boot loops, will not allow DUT to get to startup screen. DUT will power on and off randomly. | N | N | N | N | Y |
| Locks Disabled | System locks via User, FRP, SIM, FindMyiPhone, and/or Antitheft are disabled. | Y | Y | Y | Y | N |
| Content Clear | DUT was succesfully wiped of personal content via systemic clear method. | Pass | Pass | Pass | Pass | Fail |
| Display Functional | Touchscreen works to navigate to settings menu to allow USB 3.0 debug / Trust setting | Y | Y | Y | N | Y/N |
| Excessive Screen Wear | More than three scratches, ½-inch each | N | N | Y | Y | N |
| | Delamination - screen peels up causing discoloration on lens. Not caused by a drop or physical abuse. | | | | | |
| Excessive Housing Wear | More than three scratches, ½-inch each, combined on all housing surfaces | N | N | Y | Y | N |
| | More than three dents or dings (i.e., a flaw that is typically caused by dropping a DUT) | | | | | |
| Screen Burn | The display and/or LCD has no screen burn in | Y | Y | Y | N | Y/N |
| Flickering Screen | The display and/or LCD is functional with no flickering screen. | Y | Y | Y | N | Y/N |
| Dark/Light Spots | The display and/or LCD is functional with no dark spots. | Y | Y | Y | N | Y/N |
| Lines or missing pixels on DUT | The display and/or LCD is functional, with no lines or dead (missing) pixels on the DUT display. | Y | Y | Y | N | Y/N |
| Ghosting | The display and/or LCD is free from ghosting behavior. | Y | Y | Y | N | Y/N |
| Front camera or flash | Camera is functional, test picture is clear, and flash is functional. | Y | Y | Y | N | Y/N |
| Headset jack | Headset and headset microphone are functional during testing. | Pass | Pass | Pass | Fail | Pass |
| Proximity or light sensors | Test reads sensors and functions properly. | Pass | Pass | Pass | Fail | Pass |
| Side keys | Side keys respond during function testing. | Pass | Pass | Pass | Fail | Pass |
| Speakers or microphones | DUT is audible, clear, and functioning. | Pass | Pass | Pass | Fail | Pass |
| Vibrator | DUT will vibrate when tested. | Pass | Pass | Pass | Fail | Pass |
| Cannot connect to PC | PC reads DUT when connected via USB cable. | Pass | Pass | Pass | Pass | Fail |
| Cannot detect SIM | DUT accepts and can read the SIM card. | Pass | Pass | Pass | Pass | Fail |
| Cannot detect SD | DUT accepts and can read the SD card. | Pass | Pass | Pass | Pass | Fail |
| Does not charge | DUT accepts charge and charge indicator displays charging status. | Pass | Pass | Pass | Pass | Fail |
| Fingerprint sensor | Test reads sensor and functions properly. Automated test will read fingerprint and unlock DUT. | Pass | Pass | Pass | Pass | Fail |
| Rear Camera | Camera is functional and test picture is clear. | Pass | Pass | Pass | Pass | Fail |
| WiFi | DUT displays available WiFi devices to pair with during testing. | Pass | Pass | Pass | Pass | Fail |
| Bluetooth | DUT displays available Bluetooth devices to pair with during testing. | Pass | Pass | Pass | Pass | Fail |
| GPS cannot detect | DUT can identify location when location is turned on via maps. | Pass | Pass | Pass | Pass | Fail |

Each individual DUT is data-wiped subsequent to processing and data-wipe execution is automatically verified. The QR Bar Code application is removed during the data-wipe execution, and a corresponding QR Bar Code sticker is automatically printed on the individual DUT.

English and Spanish languages are supported by all components of the system. In various embodiments, the components of the system may support additional languages.

In certain exemplary embodiments, the computerized pallets at each of four or more of the first six individual testing stations in each lane are equipped with 2 independent X-Y arms. The Cartesion robotic systems used to equip the individual testing stations are acquired from one or more of Macron Dynamics, Newmark Systems, Yamaha-Motor.com, and/or IselAutomation.

A one-time teaching process is contemplated for each form factor for each possible operation before optimal automation of the conveyorized system. The origin location of each individual DUT in the individual DUT slot is defined by the computerized pallet embedded controller, based upon each individual DUT make and model. An X-Y arm extrapolates the offset X-Y coordinates based on the form factor of an individual DUT and the location of the individual DUT in the computerized pallet.

At a User Interface Station ("UIS"), all of the information being stored in the BPM System is displayed to a user or operator. A dashboard allows the user or operator to view a current status of the conveyorized system according to an embodiment described in this Example. Multiple individual DUTs process through various individual testing stations in parallel, and the processing of the individual DUTs are intelligently displayed at the UIS. At the UIS, a user or operator is able to review the processing details for each individual DUT on the individual DUT "Details" page. Further, a user or operator can scan the QR Bar Code of an individual DUT to review the processing details for that individual DUT.

Control over the processing activity of the DUT controllers is performed by the BPM System, which provides an "operation view" per lane of the conveyorized system and per DUT controller in each lane. Each DUT controller is connected using GPIO to LED lights in order to provide charge status, FMPI, and other indications to a user or operator that an individual DUT requires attention. Complete information regarding any issue with processing of an individual DUT is available to a user or operator in the "operation view." Each DUT controller is also connected to physical buttons for basic interaction of a user or operator with the conveyorized system, including, but not limited to, starting and/or stopping of computerized pallet operations, starting and/or stopping of the conveyor belt.

DUT controller software is integrated into several software and hardware components according to an embodiment described in this Example. The BPM System integrates with each DUT controller on the MCE framework, which uses the BPM System to initiate actions on the DUT controller. An X-Y arm integrates with each DUT controller for any "finger" interaction with each individual DUT, optionally at the BPM System. Smart chargers integrate with each DUT controller to determine whether batteries in individual DUTs have faulty batteries and to communicate external battery data. In an embodiment, individual LED lights integrate with GPIOs on DUT controllers that turn on or off the individual LED lights according to individual DUT status. In another embodiment, individual LED lights integrate to a DUT controller and are controlled directly from the BPM System.

It is expected that a conveyorized system according to an embodiment described in this Example, operating at approximately 4 minutes per individual testing station in a single lane, can process 16 mobile telecommunication devices every 4 minutes, and can complete processing of 16 mobile telecommunication devices 15 times each hour. Accordingly, a conveyorized system according to such an embodiment described in this Example could be capable of processing 240 mobile telecommunication devices per hour per lane. With two lanes in parallel operation, a conveyorized system according to such an embodiment described in this Example could be capable of processing 480 mobile telecommunication devices per hour. Accordingly, a conveyorized system according to such an embodiment described in this Example could be capable of processing 8 mobile telecommunication devices per minute, or 1 mobile telecommunication device every 7.5 seconds.

It is expected that a conveyorized system according to another embodiment described in this Example, operating at approximately 3 minutes per individual testing station in a single lane, can process 16 mobile telecommunication devices every 3 minutes, and can complete processing of 16 mobile telecommunication devices 20 times each hour. Accordingly, a conveyorized system according to such an embodiment described in this Example could be capable of processing 320 mobile telecommunication devices per hour per lane. With two lanes in a parallel operation, a conveyorized system according to such an embodiment described in this Example could be capable of processing 640 mobile telecommunication devices per hour. Accordingly, a conveyorized system according to such an embodiment described in this Example could be capable of processing 10.67 mobile telecommunication devices per minute, or 1 mobile telecommunication device every 5.6 seconds.

It is expected that a conveyorized system according to yet another embodiment described in this Example, operating at approximately 2 minutes per individual testing station in a single lane, can process 16 mobile telecommunication devices every 2 minutes, and can complete processing of 16 mobile telecommunication devices 30 times each hour. Accordingly, a conveyorized system according to such an embodiment described in this Example could be capable of processing 480 mobile telecommunication devices per hour per lane. With two lanes in a parallel operation, a conveyorized system according to such an embodiment described in this Example could be capable of processing 960 mobile telecommunication devices per hour. Accordingly, a conveyorized system according to such an embodiment described in this Example could be capable of processing 16 mobile telecommunication devices per minute, or 1 mobile telecommunication device every 3.75 seconds.

Automation is more consistent and faster than a human due to fatigue over a long period of time, so automation could be expected to process a mobile telecommunication device consistently in less than 15 minutes. If a conveyorized system according to yet another embodiment described in this Example could process a mobile telecommunication device in approximately 16 minutes, with two lanes in parallel operation, a conveyorized system according to such an embodiment described in this Example could completely process 32 mobile telecommunication devices every 2 minutes, or 960 mobile telecommunication devices every hour.

Throughput is increased by having more individual testing stations operating concurrently, so more individual testing stations results in an increased processing rate. By comparison, manual processing of mobile telecommunication devices could require 30 people working daily 8-hour shifts to process approximately 960 mobile telecommunication devices, at a rate of 15 minutes per phone per person.

### EXAMPLE 3

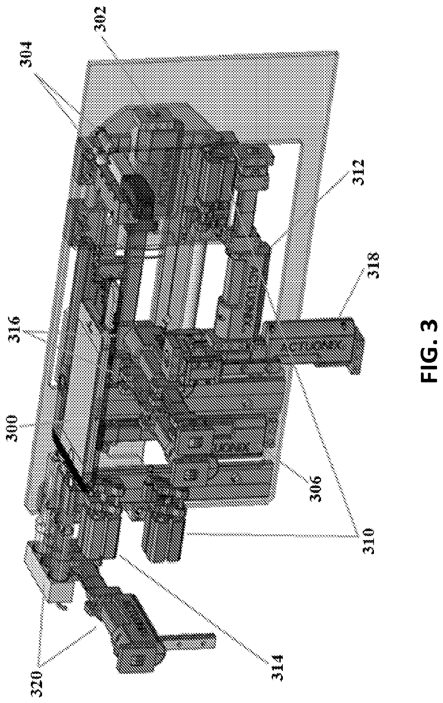

In an exemplary embodiment of a computerized pallet that can be configured to carry mobile telecommunication devices within a conveyorized system for processing, the computerized pallet includes a plurality of slots for mobile telecommunication devices. One nonlimiting example of a plurality of slots is 16 slots in a computerized pallet. Each mobile telecommunication device (MTD), or device under test (DUT), occupies one slot of the plurality of slots in each computerized pallet, all of which simultaneously index to move through, and stop at, different individual testing stations of a conveyorized system. At individual testing stations, each individual DUT is handled and manipulated by a plurality of actuators within each computerized pallet and at each individual testing station. Because each individual actuator of a plurality of actuators operates very closely to other individual actuators and each individual actuator must clear other individual actuators to fit and function mechanically, the individual actuators are illustrated collectively in **FIG. 3****.**

Within each computerized pallet, individual actuators of a plurality of actuators supplied to an individual DUT **300** of a plurality of DUTs placed in an individual slot of a plurality of slots may include, but are not limited to: gripping actuator **302** for gripping of the individual DUT **300** in an individual slot; flipping and/or rotating actuator(s) **304** for flipping and/or rotating of the individual DUT **300** in an individual slot during diagnostic testing of the camera(s) of the individual DUT **300;** vertical lifting and/or positioning actuator **306** for elevation of a surface of the individual DUT **300** for diagnostic testing of the camera(s) and so that a X-Y arm can confront the surface.

In certain exemplary embodiments of conveyorized systems, a conveyor includes two lanes operating independently, each of which includes 5 individual testing stations equipped with one or more X-Y arms operating independently. To allow a X-Y arm or gantry to confront a touchscreen and/or hard buttons of the individual DUT **300,** individual actuators of a plurality of actuators supplied to each individual testing station equipped with one or more X-Y arms operating independently may include, but are not limited to: vertical support actuator **308** to support the bottom of the individual DUT **300** for push button support pushing down on the individual DUT **300.**

In certain exemplary embodiments of conveyorized systems, a conveyor includes lanes operating independently, each of which includes 2 camera individual testing stations, elements of which may be moved around and into an individual testing station from above and/or below an individual computerized pallet, and interact with the individual DUT **300** within an individual slot of a plurality of slots. To activate an audio jack port of the individual DUT **300,** individual actuators of a plurality of actuators supplied to each camera individual testing station may include, but are not limited to: top and bottom 3.5 audio jack actuators **310,** with two audio jack actuators **310** per individual DUT slot; index upper 3.5 audio jack to phone height actuator **312.**

In certain exemplary embodiments of conveyorized systems, a conveyor includes lanes operating independently, each of which includes a receiving station, elements of which may be moved upwards to an individual computerized pallet from below the individual computerized pallet, and interact with the individual DUT **300** an individual slot of a plurality of slots of the computerized pallet. In order to automate the individual DUT **300** being held in place and plugged in with its corresponding charge and data sync connector, individual actuators of a plurality of actuators supplied to each receiving station may include, but are not limited to: connector insertion actuator **314;** DUT location actuators **316,** with two DUT location actuators **316** for the individual DUT **300,** one each on the front and back of the individual DUT **300,** so as to horizontally center DUT ports of the individual DUT **300** over a connector; DUT vertical centering actuator **318,** with gripper and connector ports; index connector actuator 320, with selection from connector types.

### EXAMPLE 4

In certain exemplary embodiments of conveyorized systems, the system may be configured to process any type of DUT 400, which may comprise any smartphone device. The system may be structured to upload data from DUT 400. The system may use the uploaded data to determine at least the DUT 400 model type to known, for example, the physical characteristics of DUT 400. The information pulled may also be used to compare the physical characteristics of DUT 400 to a database lookup of known physical characteristics of the phone model type of DUT 400. The information pulled may be used to determine, for example, the exact location and type of USB port 402 of DUT 400, for automatic insertion of USB cable, automatic height adjustment and automatic location adjustment for phone pedestal 435 used. The DUT 400 may be secured to a pallet 409. Each pallet 409 may include a plurality of cells so that, for example, a given cell may be associated with a given DUT 400. Each of the plurality of cells may comprise a LED indicator, for example, a green LED indicator. After the phone model is determined, for example, the correct USB connector may be automatically inserted into USB port 402 for a given phone model type. The DUT 400 may be secured to pallet 409 with a gripping device, for example. The gripping device may hold and suspended the DUT 400 on pallet 409 as it moves along the conveyor from test station to test station. The DUT 400 may be flipped or rotated to expose all sides for a photometric analysis to determine a cosmetic grade of the DUT 400, for example. The pallet 409 may finish the process by moving to a final position where DUT 400 may be released from the pallet.

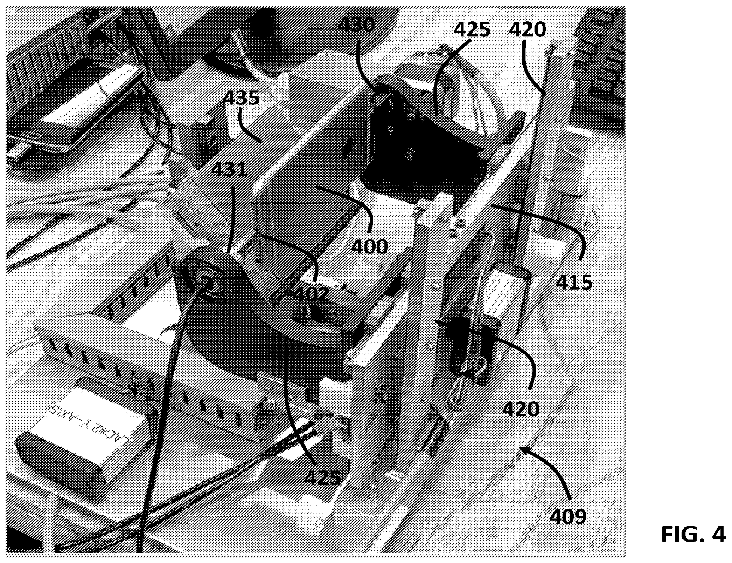

The pallet 409 as illustrated in FIG 4 may comprise: a fixed base 410, an adjustable base 415, a pair of adjustment members 420, a pair of arms 425, a first rotational member 430, a second rotational member 431, and an adjustment pedestal 435. The DUT 400 may be located on adjustment pedestal 435 to start the process. Once the DUT 400 is located on adjustment pedestal 435, the adjustment pedestal 435 may secure DUT 400. The adjustment pedestal 435 may vertically move DUT 400 into location for automatic attachment to the first and second rotational members 430, 431 and automatic insertion into USB port 402. After DUT 400 is attached to pallet 409, the adjustment pedestal 435 may release DUT 400 and returns to a position so that DUT 400 may rotate, for example 360 degrees. The adjustment members 420 couple to adjustable base 415, so that adjustable base 415 may move vertically to adjust the position of DUT 400. The rotational members 430, 431 may rotate the DUT 400 into various positions so that, for example a 360 degree visual grading may be performed for DUT 400.

The use of the terms "a," "an," "the," and similar referents in the context of describing the present invention (especially in the context of the claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Use of the term "about" is intended to describe values either above or below the stated value in a range of approximately ±10%; in other embodiments, the values may range in value above or below the stated value in a range of approximately ±5%; in other embodiments, the values may range in value above or below the stated value in a range of approximately ±2%; in other embodiments, the values may range in value above or below the stated value in a range of approximately ±1%. The preceding ranges are intended to be made clear by context, and no further limitation is implied. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

While in the foregoing specification, this invention has been described in relation to certain embodiments thereof, and many details have been put forth for the purpose of illustration, it will be apparent to those skilled in the art that the invention is susceptible to additional embodiments and that certain of the details described herein can be varied considerably without departing from the basic principles of the invention.

The present invention may be embodied in other specific forms, accordingly, reference should be made to the appended claims, rather than to the foregoing specification, as indicating the scope of the invention.

## Claims

1. A conveyorized system (200) for processing a plurality of mobile telecommunication devices (100, 206, 300, 400) simultaneously, comprising:
a) a conveyor (202) comprising at least one testing lane;
b) a plurality of testing stations in each of the at least one testing lane;
c) a plurality of pallets (204, 208, 212, 216, 222, 222, 228, 234, 240, 246), each pallet (204, 208, 212, 216, 222, 222, 228, 234, 240, 246) being on the conveyor (202) at each of the plurality of testing stations;
d) a plurality of mobile telecommunication devices (100, 206, 300, 400) in each of the plurality of pallets (204, 208, 212, 216, 222, 222, 228, 234, 240, 246); and
e) a plurality of controllers, a respective one of the plurality of controllers coupled to each of the plurality of mobile telecommunication devices (100, 206, 300, 400) in a respective one of each of the plurality of pallets (204, 208, 212, 216, 222, 222, 228, 234, 240, 246);
each of the plurality of testing stations determines a model of each mobile telecommunication device (100, 206, 300, 400) and automatically determines the proper connector and port locations for automated insertion of cables for each of the plurality of mobile telecommunication devices (100, 206, 300, 400); and
each of the plurality of testing stations performs at least one diagnostic test on each of the plurality of mobile telecommunication devices (100, 206, 300, 400), coupled to a respective one of the plurality of controllers, in each pallet (204, 208, 212, 216, 222, 222, 228, 234, 240, 246);
wherein each of the plurality of pallets (204, 208, 212, 216, 222, 222, 228, 234, 240, 246) comprises at least one rechargeable battery for powering the plurality of mobile telecommunication devices (100, 206, 300, 400) on said pallet (204, 208, 212, 216, 222, 222, 228, 234, 240, 246);
at least one charging station positioned near the conveyor (202); and
a contactor disposed on each of the plurality of pallets (204, 208, 212, 216, 222, 222, 228, 234, 240, 246) that is operative to couple the rechargeable battery to the charging station.

2. The system of claim 1, wherein the at least one testing lane comprises a plurality of testing lanes.

3. The system of claim 1, further comprising a robotic arm operative to load the plurality of mobile telecommunication devices (100, 206, 300, 400) into each of the plurality of pallets (204, 208, 212, 216, 222, 222, 228, 234, 240, 246).

4. The system of claim 1, wherein the automated insertion of cables comprises automated insertion of power, data, and audio connectors into each of the plurality of mobile telecommunications devices (100, 206, 300, 400).

5. The system of claim 4, further comprising a plurality of solenoids, each of the plurality of solenoids operatively coupled to a respective one of the plurality of controllers, the data, power, and audio connectors are fixed to one of the plurality of solenoids for insertion into the mobile telecommunication device (100, 206, 300, 400).

6. The system of claim 1, wherein determining a model of each mobile telecommunication device (100, 206, 300, 400) comprises determining a model of each mobile telecommunication device (100, 206, 300, 400) using wireless communication with each of the plurality of mobile telecommunications devices (100, 206, 300, 400).

7. The system of claim 6, wherein the wireless communication comprises wireless communication using the Bluetooth standard.

8. The system of claim 1, wherein at one of the plurality of testing stations at least one of a data wipe, a mobile operating system flash, and at least one diagnostic test is performed for one or more of the plurality of mobile telecommunication devices (100, 206, 300, 400).

9. The system of claim 1, wherein at least one of the plurality of testing stations comprises at least one multi-axis device for performing diagnostic tests for a touch screen for the plurality of mobile telecommunication devices (100, 206, 300, 400).

10. The system of claim 9, wherein:
the multi-axis device comprises an X-Y arm (220, 226, 232) that operates pneumatic plungers on each mobile telecommunications device's display screen touch points; and
the X-Y arm (220, 226, 232) is operatively coupled to and under the control of one of the plurality of controllers.

11. The system of claim 1, wherein at least one of the plurality of testing stations comprises an enclosure (238, 244) to provide an audio and an ambient light isolation for a machine vision photometric grading of the plurality of mobile telecommunication devices (100, 206, 300, 400).

12. The system of claim 1, further comprising:
a motion control system operative to control motion of the conveyor (202) and the plurality of pallets (204, 208, 212, 216, 222, 222, 228, 234, 240, 246); and
a business processing management system operative to maintains a running log of a status and/or a state of each mobile telecommunication device (100, 206, 300, 400) as it moves through the test stations;
wherein each of the plurality of controllers is operatively coupled to the motion control system and the business processing management system for data exchange therebetween.

13. The system of claim 1, wherein each of the plurality of pallets (204, 208, 212, 216, 222, 222, 228, 234, 240, 246) includes an electromechanical system, under control of one of the plurality of controllers, operative to rotate each mobile telecommunication device (100, 206, 300, 400) independently in two dimensions flip each mobile telecommunication device (100, 206, 300, 400) horizontally and/or vertically so as to enable various functional and cosmetic diagnostic tests.

14. A method of processing a plurality of mobile telecommunication devices (100, 206, 300, 400) simultaneously, the method comprising the steps of:
a) loading the plurality of mobile telecommunication devices (100, 206, 300, 400) into a pallet (204, 208, 212, 216, 222, 222, 228, 234, 240, 246);
b) moving the pallet (204, 208, 212, 216, 222, 222, 228, 234, 240, 246) on a conveyor (202) comprising at least one testing lane comprising a plurality of testing stations, each of the plurality of testing stations determines a model of each mobile telecommunication device (100, 206, 300, 400) and automatically determines the proper connector and port locations for automated insertion of cables into each of the plurality of mobile telecommunications devices (100, 206, 300, 400);
c) testing individually each mobile telecommunication device (100, 206, 300, 400) of the plurality of mobile telecommunication devices (100, 206, 300, 400) loaded on the pallet (204, 208, 212, 216, 222, 222, 228, 234, 240, 246) according to at least one diagnostic test; and
wherein the pallet (204, 208, 212, 216, 222, 222, 228, 234, 240, 246) comprises at least one rechargeable battery for powering the plurality of mobile telecommunication devices (100, 206, 300, 400) on said pallet (204, 208, 212, 216, 222, 222, 228, 234, 240, 246);
at least one charging station positioned near the conveyor (202); and
a contactor disposed on each of the plurality of pallets (204, 208, 212, 216, 222, 222, 228, 234, 240, 246) that is operative to couple the rechargeable battery to the charging station.

## Patentansprüche

1. Fördersystem (200) zur gleichzeitigen Bearbeitung einer Mehrzahl von mobilen Telekommunikationsgeräten (100, 206, 300, 400), umfassend:
a) eine Fördereinrichtung (202) mit mindestens einer Prüfspur;
b) eine Mehrzahl von Prüfstationen an jeder der mindestens einen Prüfspur;
c) eine Mehrzahl von Paletten (204, 208, 212, 216, 222, 222, 228, 234, 240, 246), wobei sich jede Palette (204, 208, 212, 216, 222, 222, 228, 234, 240, 246) an jeder der Mehrzahl von Prüfstationen an der Fördereinrichtung (202) befindet;
d) eine Mehrzahl von mobilen Telekommunikationsgeräten (100, 206, 300, 400) in jeder der Mehrzahl von Paletten (204, 208, 212, 216, 222, 222, 228, 234, 240, 246); und
e) eine Mehrzahl von Steuereinheiten, wobei jeweils eine der Mehrzahl von Steuereinheiten mit jedem der Mehrzahl von mobilen Telekommunikationsgeräten (100, 206, 300, 400) in jeweils einer der Mehrzahl von Paletten (204, 208, 212, 216, 222, 222, 228, 234, 240, 246) verbunden ist;
jede der mehreren Prüfstationen ein Modell jedes mobilen Telekommunikationsgeräts (100, 206, 300, 400) ermittelt und automatisch die richtigen Steckverbinder- und Anschlusspositionen zum automatischen Einstecken von Kabeln für jedes der mehreren mobilen Telekommunikationsgeräte (100, 206, 300, 400) ermittelt; und
jede der mehreren Prüfstationen mindestens eine Diagnoseprüfung an jedem der mehreren mobilen Telekommunikationsgeräte (100, 206, 300, 400) durchführt, die mit jeweils einer der mehreren Steuereinheiten in jeder Palette (204, 208, 212, 216, 222, 222, 228, 234, 240, 246) verbunden sind;
wobei jede der Mehrzahl von Paletten (204, 208, 212, 216, 222, 222, 228, 234, 240, 246) mindestens eine wiederaufladbare Batterie zum Versorgen der Mehrzahl von mobilen Telekommunikationsgeräten (100, 206, 300, 400) auf der Palette (204, 208, 212, 216, 222, 222, 228, 234, 240, 246) umfasst;
mindestens eine Ladestation, die in der Nähe der Fördereinrichtung (202) positioniert ist; und
ein Schütz, das an jeder der Mehrzahl von Paletten (204, 208, 212, 216, 222, 222, 228, 234, 240, 246) angeordnet ist und betreibbar ist, um die wiederaufladbare Batterie mit der Ladestation zu verbinden.

2. System nach Anspruch 1, bei dem die mindestens eine Prüfspur eine Mehrzahl von Prüfspuren umfasst.

3. System nach Anspruch 1, ferner umfassend einen Roboterarm, der betreibbar ist, um die Mehrzahl von mobilen Telekommunikationsgeräten (100, 206, 300, 400) in jede der Mehrzahl von Paletten (204, 208, 212, 216, 222, 228, 234, 240, 246) zu laden.

4. System nach Anspruch 1, bei dem das automatische Einstecken von Kabeln das automatische Einstecken von Strom-, Daten- und Audioanschlüssen in jedes der mehreren mobilen Telekommunikationsgeräte (100, 206, 300, 400) umfasst.

5. System nach Anspruch 4, ferner umfassend eine Mehrzahl von Magnetspulen, wobei jede der Mehrzahl von Magnetspulen funktionsmäßig mit einer entsprechenden der Mehrzahl von Steuereinheiten gekoppelt ist, und die Daten-, Strom- und Audioanschlüsse zum Einstecken in die mobile Telekommunikationsvorrichtung (100, 206, 300, 400) an einer der Mehrzahl von Magnetspulen befestigt sind.

6. System nach Anspruch 1, bei dem das Bestimmen eines Modells jedes mobilen Telekommunikationsgeräts (100, 206, 300, 400) das Bestimmen eines Modells jedes mobilen Telekommunikationsgeräts (100, 206, 300, 400) unter Verwendung einer drahtlosen Kommunikation mit jedem der Mehrzahl von mobilen Telekommunikationsgeräten (100, 206, 300, 400) umfasst.

7. System nach Anspruch 6, bei dem die drahtlose Kommunikation eine drahtlose Kommunikation unter Verwendung des Bluetooth-Standards umfasst.

8. System nach Anspruch 1, bei dem an einer der mehreren Prüfstationen für eines oder mehrere der mehreren mobilen Telekommunikationsgeräte (100, 206, 300, 400) ein Löschen von Daten, ein Flashen des mobilen Betriebssystems und/oder mindestens eine Diagnoseprüfung durchgeführt wird.

9. System nach Anspruch 1, bei dem mindestens eine der mehreren Prüfstationen mindestens eine mehrachsige Vorrichtung zum Durchführen von Diagnoseprüfungen an einem Touchscreen für die mehreren mobilen Telekommunikationsgeräte (100, 206, 300, 400) umfasst.

10. System nach Anspruch 9, bei dem
die mehrachsige Vorrichtung einen X-Y-Arm (220, 226, 232) umfasst, der pneumatische Kolben an den Bildschirmberührungspunkten jedes mobilen Telekommunikationsgeräts betätigt; und
der X-Y-Arm (220, 226, 232) funktionsmäßig mit einer der mehreren Steuereinheiten gekoppelt ist und von dieser gesteuert wird.

11. System nach Anspruch 1, bei dem mindestens eine der mehreren Prüfstationen ein Gehäuse (238, 244) umfasst, um eine Audio- und Umgebungslichtisolierung für eine photometrische Bewertung per maschineller Bildverarbeitung der mehreren mobilen Telekommunikationsgeräte (100, 206, 300, 400) bereitzustellen.

12. System nach Anspruch 1, ferner umfassend:
ein Bewegungssteuerungssystem, das betreibbar ist, um die Bewegung der Fördereinrichtung (202) und der Mehrzahl von Paletten (204, 208, 212, 216, 222, 222, 228, 234, 240, 246) zu steuern; und
ein Vorgangsverarbeitungsmanagementsystem, das ein Ablaufprotokoll eines Status und/oder eines Zustands jedes mobilen Telekommunikationsgeräts (100, 206, 300, 400) während seiner Bewegung durch die Prüfstationen führt;
wobei jede der mehreren Steuereinheiten funktionsmäßig mit dem Bewegungssteuerungssystem und dem Vorgangsverarbeitungsmanagementsystem für den Datenaustausch dazwischen verbunden ist.

13. System nach Anspruch 1, bei dem jede der Mehrzahl von Paletten (204, 208, 212, 216, 222, 222, 228, 234, 240, 246) ein elektromechanisches System umfasst, das unter der Steuerung einer der Mehrzahl von Steuereinheiten betreibbar ist, um jedes mobile Telekommunikationsgerät (100, 206, 300, 400) unabhängig voneinander in zwei Dimensionen zu drehen und jedes mobile Telekommunikationsgerät (100, 206, 300, 400) horizontal und/oder vertikal zu kippen, um verschiedene funktionale und kosmetische Diagnoseprüfungen zu ermöglichen.

14. Verfahren zum gleichzeitigen Bearbeiten einer Mehrzahl von mobilen Telekommunikationsgeräten (100, 206, 300, 400), wobei das Verfahren die folgenden Schritte umfasst:
a) Laden der Mehrzahl von mobilen Telekommunikationsgeräten (100, 206, 300, 400) auf eine Palette (204, 208, 212, 216, 222, 222, 228, 234, 240, 246);
b) Bewegen der Palette (204, 208, 212, 216, 222, 222, 228, 234, 240, 246) auf einer Fördereinrichtung (202), die mindestens eine Prüfspur umfasst, die eine Mehrzahl von Prüfstationen umfasst, wobei jede der Mehrzahl von Prüfstationen ein Modell jedes mobilen Telekommunikationsgeräts (100, 206, 300, 400) und automatisch die richtigen Stecker- und Anschlusspositionen für das automatische Einstecken von Kabeln in jedes der Mehrzahl von mobilen Telekommunikationsgeräten (100, 206, 300, 400) bestimmt;
c) individuelles Prüfen jedes mobilen Telekommunikationsgeräts (100, 206, 300, 400) der Mehrzahl von auf die Palette (204, 208, 212, 216, 222, 222, 228, 234, 240, 246) geladenen mobilen Telekommunikationsgeräten (100, 206, 300, 400), gemäß mindestens einer Diagnoseprüfung; und
wobei die Palette (204, 208, 212, 216, 222, 222, 228, 234, 240, 246)
mindestens eine wiederaufladbare Batterie zum Versorgen der Mehrzahl von mobilen Telekommunikationsgeräten (100, 206, 300, 400) auf der Palette (204, 208, 212, 216, 222, 222, 228, 234, 240, 246) mit Strom;
mindestens eine in der Nähe der Fördereinrichtung (202) angeordnete Ladestation; und
ein Schütz umfasst, das an jeder der Mehrzahl von Paletten (204, 208, 212, 216, 222, 222, 228, 234, 240, 246) angeordnet ist und dazu dient, die wiederaufladbare Batterie mit der Ladestation zu verbinden.

## Revendications

1. Un système convoyeur (200) pour le traitement simultané d'une pluralité de dispositifs de télécommunication mobiles (100, 206, 300, 400), comprenant :
a) un convoyeur (202) comprenant au moins une voie de test ;
b) une pluralité de stations de test dans chacune des au moins une voie de test ;
c) une pluralité de palettes (204, 208, 212, 216, 222, 222, 228, 234, 240, 246), chaque palette (204, 208, 212, 216, 222, 222, 228, 234, 240, 246) étant sur le convoyeur (202) à chacune des stations de test ;
d) une pluralité de dispositifs de télécommunication mobiles (100, 206, 300, 400) dans chacune des palettes parmi la pluralité de palettes (204, 208, 212, 216, 222, 222, 228, 234, 240, 246) ; et
e) une pluralité de contrôleurs, un contrôleur respectif de la pluralité de contrôleurs étant couplé à chacun des dispositifs de télécommunication mobiles (100, 206, 300, 400) dans une palette respective de chacune des palettes parmi la pluralité de palettes (204, 208, 212, 216, 222, 222, 228, 234, 240, 246) ;
chacune des stations de test parmi la pluralité de stations de test détermine un modèle de chaque dispositif de télécommunication mobile (100, 206, 300, 400) et détermine automatiquement les emplacements de connecteurs et de ports appropriés pour l'insertion automatisée de câbles pour chacun des dispositifs de télécommunication mobiles (100, 206, 300, 400) ; et
chacune des stations de test parmi la pluralité de stations de test effectue au moins un test de diagnostic sur chacun des dispositifs de télécommunication mobiles (100, 206, 300, 400), couplés à un contrôleur respectif parmi la pluralité de contrôleurs, dans chaque palette (204, 208, 212, 216, 222, 222, 228, 234, 240, 246) ;
dans lequel chacune des palettes parmi la pluralité de palettes (204, 208, 212, 216, 222, 222, 228, 234, 240, 246) comprend au moins une batterie rechargeable pour alimenter la pluralité de dispositifs de télécommunication mobiles (100, 206, 300, 400) sur ladite palette (204, 208, 212, 216, 222, 222, 228, 234, 240, 246) ;
au moins une station de charge positionnée près du convoyeur (202) ; et
un contacteur disposé sur chacune des palettes parmi la pluralité de palettes (204, 208, 212, 216, 222, 222, 228, 234, 240, 246) qui est configuré pour coupler la batterie rechargeable à la station de charge.

2. Le système selon la revendication 1, dans lequel l'au moins une voie de test comprend une pluralité de voies de test.

3. Le système selon la revendication 1, comprenant en outre un bras robotique configuré pour charger la pluralité de dispositifs de télécommunication mobiles (100, 206, 300, 400) dans chacune des palettes parmi la pluralité de palettes (204, 208, 212, 216, 222, 222, 228, 234, 240, 246).

4. Le système selon la revendication 1, dans lequel l'insertion automatisée de câbles comprend l'insertion automatisée de connecteurs d'alimentation, de données et audio dans chacun des dispositifs de télécommunication mobiles (100, 206, 300, 400).

5. Le système selon la revendication 4, comprenant en outre une pluralité de solénoïdes, chacun des solénoïdes parmi la pluralité de solénoïdes étant couplé de manière opérationnelle à un contrôleur respectif parmi la pluralité de contrôleurs, les connecteurs de données, d'alimentation et audio étant fixés à l'un des solénoïdes pour l'insertion dans le dispositif de télécommunication mobile (100, 206, 300, 400).

6. Le système selon la revendication 1, dans lequel la détermination d'un modèle de chaque dispositif de télécommunication mobile (100, 206, 300, 400) comprend la détermination d'un modèle de chaque dispositif de télécommunication mobile (100, 206, 300, 400) en utilisant la communication sans fil avec chacun des dispositifs de télécommunication mobiles (100, 206, 300, 400).

7. Le système selon la revendication 6, dans lequel la communication sans fil comprend une communication sans fil utilisant la norme Bluetooth.

8. Le système selon la revendication 1, dans lequel, à l'une des stations de test est effectué pour un ou plusieurs des dispositifs de télécommunication mobiles (100, 206, 300, 400) au moins une opération parmi un effacement de données, un flashage du système d'exploitation mobile et au moins un test de diagnostic.

9. Le système selon la revendication 1, dans lequel au moins l'une des stations de test comprend au moins un dispositif multi-axes pour effectuer des tests de diagnostic pour un écran tactile pour la pluralité de dispositifs de télécommunication mobiles (100, 206, 300, 400).

10. Le système selon la revendication 9, dans lequel :
le dispositif multi-axes comprend un bras X-Y (220, 226, 232) qui actionne des plongeurs pneumatiques sur les points de contact de l'écran d'affichage de chaque dispositif de télécommunication mobile ; et
le bras X-Y (220, 226, 232) est couplé de manière opérationnelle et sous le contrôle de l'un des contrôleurs parmi la pluralité de contrôleurs.

11. Le système selon la revendication 1, dans lequel au moins l'une des stations de test parmi la pluralité de stations de test comprend une enceinte (238, 244) pour assurer une isolation audio et de la lumière ambiante pour une évaluation photométrique par vision artificielle de la pluralité de dispositifs de télécommunication mobiles (100, 206, 300, 400).

12. Le système selon la revendication 1, comprenant en outre :
un système de contrôle de mouvement opérationnel pour contrôler le mouvement du convoyeur (202) et de la pluralité de palettes (204, 208, 212, 216, 222, 222, 228, 234, 240, 246) ; et
un système de gestion des processus d'affaires opérationnel pour maintenir un journal de bord de l'état et/ou du statut de chaque dispositif de télécommunication mobile (100, 206, 300, 400) au fur et à mesure qu'il se déplace dans les stations de test ;
dans lequel chacun des contrôleurs parmi la pluralité de contrôleurs est couplé de manière opérationnelle au système de contrôle de mouvement et au système de gestion des processus d'affaires pour l'échange de données entre eux.

13. Le système selon la revendication 1, dans lequel chacune des palettes parmi la pluralité de palettes (204, 208, 212, 216, 222, 222, 228, 234, 240, 246) comprend un système électromécanique, sous le contrôle de l'un des contrôleurs parmi la pluralité de contrôleurs, opérationnel pour faire pivoter chaque dispositif de télécommunication mobile (100, 206, 300, 400) indépendamment dans deux dimensions et pour retourner chaque dispositif de télécommunication mobile (100, 206, 300, 400) horizontalement et/ou verticalement afin de permettre divers tests de diagnostic fonctionnels et cosmétiques.

14. Une méthode de traitement simultané d'une pluralité de dispositifs de télécommunication mobiles (100, 206, 300, 400), la méthode comprenant les étapes de :
a) chargement de la pluralité de dispositifs de télécommunication mobiles (100, 206, 300, 400) dans une palette (204, 208, 212, 216, 222, 222, 228, 234, 240, 246) ;
b) déplacement de la palette (204, 208, 212, 216, 222, 222, 228, 234, 240, 246) sur un convoyeur (202) comprenant au moins une voie de test comprenant une pluralité de stations de test, chacune des stations de test parmi la pluralité de stations de test détermine un modèle de chaque dispositif de télécommunication mobile (100, 206, 300, 400) et détermine automatiquement les emplacements de connecteurs et de ports appropriés pour l'insertion automatisée de câbles dans chacun des dispositifs de télécommunication mobiles (100, 206, 300, 400) ;
c) test individuel de chaque dispositif de télécommunication mobile (100, 206, 300, 400) parmi la pluralité de dispositifs de télécommunication mobiles (100, 206, 300, 400) chargés sur la palette (204, 208, 212, 216, 222, 222, 228, 234, 240, 246) selon au moins un test de diagnostic ; et
dans laquelle la palette (204, 208, 212, 216, 222, 222, 228, 234, 240, 246) comprend au moins une batterie rechargeable pour alimenter la pluralité de dispositifs de télécommunication mobiles (100, 206, 300, 400) sur ladite palette (204, 208, 212, 216, 222, 222, 228, 234, 240, 246) ;
au moins une station de charge positionnée près du convoyeur (202) ; et
un contacteur disposé sur chacune des palettes parmi la pluralité de palettes (204, 208, 212, 216, 222, 222, 228, 234, 240, 246) qui est opérationnel pour coupler la batterie rechargeable à la station de charge.
